# EUROPÄISCHE PATENTSCHRIFT

(11) **EP 2 465 637 B1**
(45) Veröffentlichungstag und Bekanntmachung des Hinweises auf die Patenterteilung: **16.04.2014**
(21) Anmeldenummer: 11189864.9
(22) Anmeldetag: 21.11.2011
(51) Int. Cl.: B23Q 3/06, B23Q 7/04, B21D 28/26, B25B 5/08, B25B 5/16

(54) **Werkstück-Halteeinrichtung zum Festlegen eines plattenartigen Werkstückes, insbesondere eines Blechs, an einer Werkstück- Bewegungseinheit einer Werkzeugmaschine**
Workpiece holder device for fixing a board-shaped workpiece, in particular a metal sheet to a workpiece movement unit of a machine tool
Dispositif de retenue de pièce usinée pour la fixation d'une pièce usinée de type plaque, notamment d'une tôle, sur une unité de déplacement de pièce usinée d'une machine-outil

(30) Priorität: 20.12.2010 DE 102010063541
(43) Veröffentlichungstag der Anmeldung: 20.06.2012
(73) Patentinhaber: TRUMPF Werkzeugmaschinen GmbH + Co. KG, 71254 Ditzingen (DE)
(72) Erfinder: Schmidt, Christoph, 71735 Eberdingen/Hochdorf (DE)
(74) Vertreter: Kohler Schmid Möbus

(56) Entgegenhaltungen:
- EP-A1- 0 402 680
- EP-A1- 0 493 230
- US-A- 3 967 817
- US-A1- 2002 020 952

## Beschreibung

Die Erfindung betrifft eine Werkstück-Halteeinrichtung zum Festlegen eines plattenartigen Werkstückes, insbesondere eines Blechs, an einer Werkstück-Bewegungseinheit einer Werkzeugmaschine mit zumindest zwei Werkstück-Spannelementen und einem Spannantrieb, mittels dessen die Werkstück-Spannelemente ausgehend von einer Ausgangsrelativposition aufeinander zu bewegbar sind, um ein zwischen den Werkstück-Spannelementen angeordnetes Werkstück einzuspannen.

Eine derartige Werkstück-Halteeinrichtung ist z. B. aus der 3P 2000 158 068 A bekannt geworden. Im Stand der Technik dient die Werkstück-Halteeinrichtung zum Festlegen eines Bleches an einer Werkstück-Bewegungseinheit in Form einer Koordinatenführung einer Revolverstanzpresse. Um das Blech sicher an der Koordinatenführung festzulegen, weist diese zwei Werkstück-Halteeinrichtungen auf, welche baugleich ausgebildet sind und jeweils einen Spannantrieb in Form eines Kolbenzylinderantriebs aufweisen. Mittels des Spannantriebs kann ein Werkstück-Spannelement auf ein anderes Werkstück-Spannelement zu bewegt werden, um ein zwischen den Werkstück-Spannelementen angeordnetes Werkstück einzuspannen. Der Spannantrieb weist einen relativ langen Hub auf, damit einerseits bei geöffneten Werkstück-Spannelementen möglichst dicke Werkstücke zwischen den Werkstück-Spannelementen eingeführt werden können, andererseits aber auch möglichst dünne Werkstücke zwischen den Werkstück-Spannelementen eingespannt werden können. Außerdem muss der Spannantrieb eine ausreichend große Spannkraft bereitstellen, um das eingespannte Werkstück sicher zwischen den Werkstück-Spannelementen festzulegen. Aufgrund dieser Anforderungen baut der Spannantrieb, insbesondere wenn er als Kolbenzylinderantrieb ausgebildet ist, relativ groß.

Weiterer Stand der Technik ist offenbart in US 3,967,817 A und in EP 0 402 680 A1.

US 3,967,817 A betrifft eine Schwenk-Spannvorrichtung, mittels derer beispielsweise an Werkzeugmaschinen zu bearbeitende Werkstücke eingespannt werden. Die vorbekannte Schwenk-Spannvorrichtung weist einen zweiarmigen Spannhebel auf, der an einer vertikalen Welle um eine horizontale Schwenkachse schwenkbar gelagert ist. Ein zu bearbeitendes Werkstück wird zwischen dem freien Ende eines der Hebelarme des Spannhebels einerseits und einer Auflagefläche andererseits eingespannt. Zu diesem Zweck wird der Spannhebel mittels einer Kolben-Zylinder-Einheit aus einer Ausgangs-Schwenkstellung um die Schwenkachse in eine Spannstellung geschwenkt, in welcher das zu bearbeitende Werkstück von dem freien Ende des betreffenden Hebelarms beaufschlagt wird. Die Ausgangs-Schwenkstellung des Spannhebels und somit der zu Beginn der Schwenkbewegung des Spannhebels bestehende Abstand zwischen dem freien Ende des betreffenden Hebelarms und der Auflagefläche für das zu bearbeitende Werkstück kann mittels einer Stellschraube eingestellt werden. In jedem Fall ist die Ausgangs-Schwenkstellung des Schwenkhebels derart gewählt, dass das freie Ende des betreffenden Hebelarms um die Achse der den Spannhebel lagernden vertikalen Welle in eine Position bewegt werden kann, in welcher der Spannhebel das zu fixierende Werkstück mit dem freien Ende des betreffenden Hebelarms übergreift. Damit eine derartige Bewegung des Spannhebels um die Achse der vertikalen Welle möglich ist, muss das freie Ende des betreffenden Hebelarms des Spannhebels in der Ausgangs-Schwenkstellung zumindest geringfügig von der Oberseite des Werkstücks beabstandet sein. Keinesfalls darf das freie Ende des betreffenden Hebelarms in der Ausgangs-Schwenkstellung des Spannhebels eine Position einnehmen, in welcher es das zu fixierende Werkstück gegen die Auflagefläche vorspannen würde.

EP 0 402 680 A1 offenbart eine Spannvorrichtung zur klemmenden Fixierung eines Werkstückes auf einem Maschinentisch. Ein zweiarmiger Spannhebel der Spannvorrichtung ist um einen Achsbolzen schwenkbar gelagert und besitzt einen ersten Hebelarm sowie einen zweiten Hebelarm. Ein Werkstück liegt auf dem Maschinentisch und wird zur Fixierung an seiner Oberseite von einer an dem freien Ende des zweiten Hebelarms vorgesehenen Klemmnase beaufschlagt. Die zum Einspannen des Werkstücks aufzubringende Kraft wird mittels eines Hydraulikzylinders erzeugt, der an dem freien Ende des ersten Hebelarms angreift. Zur Variierung der Spannhöhe, d,h. des Abstandes, der bei Ausgangs-Schwenkstellung des zweiarmigen Spannhebels zwischen dem Maschinentisch und der Klemmnase an dem freien Ende des zweiten Hebelarms besteht, lässt sich der Winkel, den der erste Hebelarm und der zweite Hebelarm einschließen, verstellen. In jedem Fall muss die Spannhöhe derart bemessen sein, dass ein zu fixierendes Werkstück zwischen den Maschinentisch und die Klemmnase an dem freien Ende des zweiten Hebelarms eingeschoben werden kann. Dementsprechend ist es ausgeschlossen, dass ein Werkstück bei Ausgangs-Schwenkstellung des zweiarmigen Schwenkhebels zwischen der Klemmnase an dem freien Ende des zweiten Hebelarms einerseits und dem Maschinentisch andererseits eingespannt ist.

Ausgehend von dem gattungsgemäßen Stand der Technik hat sich die Erfindung zum Ziel gesetzt, eine Werkstück-Halteeinrichtung bereitzustellen, welche sich durch eine besonders einfache automatisierbare Handhabung und dessen ungeachtet durch eine kompakte Bauweise auszeichnet.

Erfindungsgemäß gelöst wird die Aufgabe durch eine Werkstück-Halteeinrichtung mit den Merkmalen von Anspruch 1.

Der Umstand, dass die Einstellmittel einen Stellantrieb aufweisen, bedingt eine besonders einfache und automatisierbare Handhabung der erfindungsgemäßen Werkstück-Halteeinrichtung. Außerdem kann die Ausgangsrelativposition der Werkstück-Spannelemente in Abhängigkeit der Dicke des einzuspannenden Werkstückes eingestellt werden, so dass der Spannantrieb unabhängig von der Dicke des einzuspannenden Werkstückes nur noch eine relativ kurze Bewegung der Werkstück-Spannelemente aufeinander zu erzeugen muss, um das Werkstück zwischen den Werkstück-Spannelementen einzuspannen. Die Anforderungen an den Spannantrieb sind dank der Einstellmittel daher geringer, so dass der Spannantrieb insgesamt vergleichsweise kompakter ausgebildet sein kann.

Vorteilhafte Weiterbildungen der Erfindung nach Anspruch 1 ergeben sich aus den Merkmalen der abhängigen Ansprüche 2 bis 21.

Im Falle einer bevorzugten Ausführungsart der Erfindung ist die Ausgangsrelativposition der Werkstück-Spannelemente mittels der Einstellmittel derart einstellbar, dass die Werkstück-Spannelemente in der eingestellten Ausgangsrelativposition an einem festzulegenden Werkstück mit einer Vorspannkraft anliegen. Aufgrund dieser Maßnahme kann der Spannantrieb besonders kompakt ausgebildet werden. Der Spannantrieb muss die Werkstück-Spannelemente lediglich um einen Betrag aufeinander zu bewegen, bei welchem sich die erforderliche Spannkraft aufbauen kann. Dabei muss der Spannantrieb die Verformung ausgleichen, welche sich im Antriebsstrang des Spannantriebs aufgrund der sich aufbauenden Spannkraft ergibt.

Durch eine besonders hohe Flexibilität zeichnet sich ein Ausführungsbeispiel der Erfindung aus, bei welchem die Ausgangsrelativposition der Werkstück-Spannelemente mittels der Einstellmittel ausgehend von einer maximalen Öffnungsstellung der Werkstück-Spannelemente einstellbar ist. Sowohl dünne als auch dicke Werkstücke können bei der maximalen Öffnungsstellung der Werkstück-Spannelemente ohne weiteres zwischen den Werkstück-Spannelementen angeordnet werden. Anschließend können die Werkstück-Spannelemente mittels der Einstellmittel in die Ausgangsrelativposition überführt werden. Bei sehr dünnen Werkstücken müssen die Werkstück-Spannelemente um einen relativ großen Betrag aufeinander zu bewegt werden, um sie in der Ausgangsrelativposition anzuordnen. Vorzugsweise sind die Einstellmittel derart ausgebildet, dass die Werkstück-Spannelemente mittels der Einstellmittel zwischen ihrer maximalen Öffnungsstellung und einer Stellung bewegbar sind, bei welcher sich die Werkstück-Spannelemente - soweit kein Werkstück zwischen ihnen angeordnet ist - gegenseitig berühren können.

Konstruktiv bevorzugt ist eine Ausführungsart der Erfindung, bei welcher die Einstellmittel im Antriebsstrang des Spannantriebs zwischen dem Spannantrieb und einem mit dem Spannantrieb bewegbaren Werkstück-Spannelement angeordnet sind.

Vorzugsweise ist zumindest eines der Werkstück-Spannelemente mittels des Spannantriebs über eine schwenkbar gelagerte Umlenkeinrichtung bewegbar. Es ergibt sich eine robuste Konstruktion, bei welcher durch entsprechend gestaltete Hebelverhältnisse ein besonders günstiges Übersetzungsverhältnis mit einfachen Mitteln ausgebildet werden kann. Dabei ist es insbesondere aus konstruktiven Gründen vorteilhaft, wenn die Einstellmittel an der schwenkbar gelagerten Umlenkeinrichtung vorgesehen sind. Die Einstellmittel und die Umlenkeinrichtung können eine kompakte Einheit bilden.

Die Einstellung der Ausgangsrelativposition der Werkstück-Spannelemente erfolgt bei einem bevorzugten Ausführungsbeispiel der Erfindung, Indem mittels der Einstellmittel eine Ausgangsschwenkposition der schwenkbar gelagerten Umlenkeinrichtung einstellbar ist. Dabei können die Einstellmittel mit einem spannantriebseitigen Antriebselement derart zusammenwirken, dass die schwenkbar gelagerte Umlenkeinrichtung mittels der Einstellmittel unterschiedlich weit geschwenkt werden kann. Je nach der auf diese Weise eingestellten Ausgangsschwenkposition der Umlenkeinrichtung ergibt sich eine Ausgangsrelativposition der Werkstück-Spannelemente.

Eine besonders robuste und einfach bauende Variante ergibt sich, indem die Einstellmittel eine verschiebbare Keilfläche aufweisen. Vorzugweise wirkt die Keilfläche mit dem vorstehend erwähnten spannantriebsseitigen Antriebselement zur Einstellung der Ausgangsrelativposition zusammen.

Im Falle einer Ausführungsart der Erfindung ist ein Rückziehantrieb vorgesehen, mittels dessen die Werkstück-Spannelemente relativ zu einem Gehäuse der Werkstück-Halteeinrichtung zwischen einer Funktionsstellung und einer Rückzugsstellung hin und her bewegbar sind. Die Möglichkeit, die Werkstück-Spannelemente zumindest zeitweise in eine Rückzugsstellung zu überführen, ermöglicht die kollisionsfreie Bearbeitung des Werkstückes in dem Werkstückbereich, welcher sich zwischen den Werkstück-Spannelementen oder in der Nähe der Werkstück-Spannelemente befindet, wenn die Werkstück-Spannelemente die Funktionsstellung einnehmen. Es ergibt sich folglich eine Totbereichsreduzierung. Wenn mehrere erfindungsgemäße Werkstück-Halteeinrichtungen vorgesehen sind, können diese mittels des jeweiligen Rückziehantriebs vorzugsweise unabhängig voneinander zwischen der Funktionsstellung und der Rückzugsstellung hin und her bewegt werden.

Der Stellantrieb, der Spannantrieb und/oder der Rückziehantrieb können z. B. als elektromotorische Antriebe ausgebildet sein. Im Sinne einer einfachen, funktionssicheren und kostengünstigen Konstruktion sind der Stellantrieb, der Spannantrieb und/oder der Rückziehantrieb als Kolbenzylinderantriebe ausgebildet. Vorzugsweise ist bzw. sind die Kolbenzylinderantriebe als pneumatische Kolbenzylinderantriebe ausgebildet. Der Einsatz von Hydrauliköl als Arbeitsmedium mit den damit verbundenen Umweltrisiken kann auf diese Weise vermieden werden.

Eine besonders einfache und kostengünstige Erfindungsvariante ergibt sich, wenn insbesondere der Stellantrieb und der Spannantrieb als einfachwirkende Kolbenzylinderantriebe ausgebildet sind. So ist es ausreichend, wenn eine Einstell- oder Spannbewegung der Werkstück-Spannelemente in einer Richtung durch die einseitige Beaufschlagung zumindest eines Kolbens des jeweiligen Antriebs mit einem Arbeitsmedium, insbesondere mit Druckluft, erzeugt werden kann, wobei die spätere Rückbewegung z. B. mittels Rückstellfederelementen bewirkt werden kann. Vorteilhafterweise ist der Rückziehantrieb jedoch als doppelwirkender Kolbenzylinderantrieb ausgestaltet.

Durch eine besonders kompakte Bauweise zeichnet sich eine Variante der Werkstück-Halteeinrichtung aus, bei welcher die Einstellmittel eine Keilfläche aufweisen, die an einem Kolben eines den Stellantrieb bildenden Kolbenzylinderantriebs vorgesehen ist.

Ebenfalls durch eine besonders kompakte Bauweise zeichnet sich eine Erfindungsbauart aus, bei welcher die Werkstück-Spannelemente an Spannelement-Halterungen vorgesehen sind, die an einem Kolben eines den Rückziehantrieb bildenden Kolbenzylinderantriebs befestigt sind.

Bei einer Variante der Erfindung ist zumindest eines der Werkstück-Spannelemente mittels des Spannantriebs über einen Keilmechanismus bzw. ein Keilgetriebe bewegbar. Es ergibt sich eine Bauart mit einem robusten Getriebe, das zur Erhöhung der mittels des Spannantriebs zwischen den Werkstück-Spannelementen erzeugbaren Spannkraft dienen kann.

Konstruktiv besonders einfache Verhältnisse ergeben sich, wenn zumindest ein Werkstück-Spannelement relativ zu dem anderen Werkstück-Spannelement insbesondere zwischen einer Öffnungsstellung und einer Stellung, in welcher die Werkstück-Spannelemente aneinander zur Anlage kommen, schwenkbar gelagert ist.

Bei einer Werkstück-Halteeinrichtung mit rückziehbaren Werkstück-Spannelementen besteht die Gefahr, dass die Werkstück-Spannelemente unerwünscht aus der Funktionsstellung in Richtung der Rückzugsstellung verschoben werden. Um ein solches Ausbrechen der Werkstück-Spannelemente aus der Funktionsstellung zu verhindern, ist im Falle einer besonders bevorzugten Variante der Erfindung die Werkstück-Halteeinrichtung derart ausgebildet, dass zumindest ein Werkstück-Spannelement an einer Spannelement-Halterung vorgesehen ist, welche von einem durch den Spannantrieb angetriebenen Druckelement beaufschlagbar ist.

Solange die Werkstück-Spannelemente mit einer durch den Spannantrieb erzeugten Spannkraft gegeneinander gespannt sind, ergibt sich zwischen dem Druckelement und der Spannelement-Halterung ein Reib- und/oder Formschluss, welcher eine (zusätzliche) Fixierung der Werkstück-Spannelemente in der Funktionsstellung bewirkt. Auf gesonderte Feststellantriebe usw., welche die Werkstück-Spannelemente in der Funktionsstellung halten, kann verzichtet werden. Alternativ oder ergänzend kann auch zumindest ein federbeaufschlagtes Rastelement vorgesehen sein, mittels dessen die Werkstück-Spannelemente in der Funktionsstellung gehalten werden können.

Um die Fixierung der Werkstück-Spannelemente in der Funktionsstellung besonders wirksam auszubilden, ist im Falle einer weiteren Ausführungsart der Erfindung ein Spannelement an einer Spannelement-Halterung vorgesehen, welche aufgrund der durch den Spannantrieb erzeugbaren Spannkraft entlang einer Beaufschlagungsachse auf zumindest zwei, zueinander geneigte Flächenabschnitte einer Führungsfläche pressbar ist. An der Führungsfläche ist die Spannelement-Halterung entlang einer Rückziehachse zum Überführen zwischen der Funktionsstellung und der Rückzugsstellung verschiebbar. Indem die zueinander geneigten Flächenabschnitte, an welchen die Spannelement-Halterung anliegt, senkrecht zur Beaufschlagungsachse und senkrecht zur Rückziehachse voneinander beabstandet sind, ergibt sich eine Erhöhung der senkrecht zu den Flächenabschnitten wirkenden Komponenten der Anpresskraft (Normalkräfte).

Da die Summe der Normalkräfte die Reibung zwischen der Spannelement-Halterung und der Führungsfläche bestimmt, ergibt sich aufgrund der Normalkraft-Erhöhung auch eine Erhöhung der Reibung, so dass die Spannelement-Halterung und damit auch die Werkstück-Spannelemente in der Funktionsstellung besonders sicher fixiert sind.

In analoger Weise wird bei einer weiteren Ausführungsart der Erfindung einem unerwünschten Verschieben eines mit einer Keilfläche versehenen Einstellbauteils entgegengewirkt. Dies erfolgt, indem das Einstellbauteil von einem spannantriebseitigen Antriebselement entlang einer Beaufschlagungsachse auf zumindest zwei zueinander geneigte Flächenabschnitte einer Führungsfläche pressbar ist, an welcher das Einstellbauteil entlang einer Stellachse zur Änderung der Ausgangsrelativposition der Werkstück-Spannelemente verschiebbar ist. Wiederum sind die Flächenabschnitte senkrecht zur Beaufschlagungsachse und senkrecht zur Stellachse aufgrund einer Freimachung zwischen Einstellbauteil und Führungsfläche voneinander beabstandet. Es ergibt sich eine Erhöhung der Reibung zwischen Einstellbauteil und Führungsfläche durch eine Erhöhung der Summe der Normalkräfte.

Um eine hohe Funktionssicherheit der Werkstück-Halteeinrichtung zu gewährleisten, sind bei einem weiteren Ausführungsbeispiel Steuermittel vorgesehen, mittels derer sichergestellt ist, dass der Stellantrieb erst betätigt werden kann, wenn die Werkstück-Spannelemente in der Funktionsstellung angeordnet sind, aber nicht, wenn die Werkstück-Spannelemente außerhalb der Funktionsstellung angeordnet sind. Dies kann beispielsweise mittels eines Sensors oder Ähnlichem erfolgen, welcher ermitteln kann, ob die Werkstück-Spannelemente in der Funktionsstellung angeordnet sind. Nachteilig an einem solchen Sensor ist der Zeitverlust durch den mit der Abfrage des Sensors verbundenen Steuerungszyklus.

Im Falle einer besonders bevorzugten Ausführungsart der Erfindung wird dieser Zeitverlust vermieden, indem ein Arbeitsmediumsystem für den Stellantrieb vorgesehen ist, welches eine Auslassöffnung aufweist, die geschlossen ist, wenn die Werkstück-Spannelemente in der Funktionsstellung angeordnet sind, und die offen ist, wenn die Werkstück-Spannelemente außerhalb der Funktionsstellung angeordnet sind. Nur bei geschlossener Auslassöffnung können die Werkstück-Spannelemente mittels des Stellantriebs zum Einstellen der Ausgangsrelativposition aufeinander zu bewegt werden. Es ergibt sich eine Zwangs- bzw. Folgesteuerung des Stellantriebs in Abhängigkeit der Stellung der Werkstück-Spannelemente entlang der Rückziehachse.

Bei einem pneumatisch betriebenen Stellantrieb kann die als Arbeitsmedium dienende Druckluft über die Auslassöffnung einfach in die Umgebung der Werkstück-Halteeinrichtung strömen, wobei die Steuermittel vorzugsweise derart ausgebildet sind, dass die Druckluft nur kurzzeitig ausströmt

Bei einer weiteren Variante der Erfindung wird im vorstehenden Sinne eine Zwangs- bzw. Folgesteuerung auf besonders elegante Weise ausgebildet, welche dazu dient, dass der Rückziehantrieb erst betätigt werden kann, um die Werkstück-Spannelemente ausgehend von der Funktionsstellung in die Rückzugsstellung zu überführen, wenn die Werkstück-Spannelemente geöffnet sind. Hierzu ist ein Arbeitsmediumsystem für den Rückziehantrieb mit einer Auslassöffnung versehen, die geschlossen ist, wenn der Stellantrieb einen Zustand einnimmt, in welchem die Werkstück-Spannelemente maximal voneinander entfernt sind (geöffneter Zustand), und die Auslassöffnung offen ist, wenn der Stellantrieb einen anderen Zustand einnimmt. Insbesondere in einem pneumatischen Antriebssystem ergibt sich aufgrund der vorstehend beschriebenen Ausführungsarten eine funktionssichere Zwangs- bzw. Folgesteuerung der erfindungsgemäßen Werkstück-Halteeinrichtung mit einfachen Mitteln.

Aus Gründen der Funktionssicherheit ist es zudem vorteilhaft, wenn der Spannantrieb zum Spannen der Werkstück-Spannelemente erst betätigt werden kann, wenn die Werkstück-Spannelemente in einer vorgegebenen Ausgangsrelativposition angeordnet sind. Auf besonders elegante Weise wird dies durch Steuermittel gewährleistet, mittels derer ein Arbeitszylinder eines den Spannantrieb bildenden Kolbenzylinderantriebs in Abhängigkeit des Arbeitsdrucks im Arbeitszylinder eines den Stellantrieb bildenden Kolbenzylinderantriebs einem Arbeitsmedium zuführbar ist. Dabei ergibt sich ein bestimmter Schaltdruck im Arbeitszylinder des Stellantriebs, erst wenn die Werkstück-Spannelemente zumindest weitgehend in die Ausgangsrelativposition überführt sind. Beispielsweise erfolgt dies, indem die Werkstück-Spannelemente in eine Ausgangsrelativposition bewegt werden, in welcher sie das einzuspannende Werkstück zwischen sich mit einer Vorspannkraft einspannen, welche durch den dann herrschenden Arbeitsdruck im Arbeitszylinder des Stellantriebs bestimmt ist.

Vorzugsweise weisen die Steuermittel ein Ventil auf, welches bei Vorliegen eines maximalen Arbeitsdruckes im Arbeitszylinder des Stellantriebs eine Arbeitsmedium-Zuführung zum Arbeitszylinder des Spannantriebs freigibt. Das Ventil ist z. B. als Rückschfagventilkombination mit Federvorspannung ausgebildet.

Um sicherzustellen, dass das einzuspannende Werkstück in der gewünschten Lage zwischen den Werkstück-Spannelementen angeordnet ist, weist die Werkstück-Halteeinrichtung einen Werkstückanschlag auf, welcher mit zumindest einem Werkstücksensor versehen ist. Der zumindest eine Werkstücksensor dient zur Erkennung, ob das Werkstück in der erforderlichen Weise an dem Werkstückanschlag anliegt bzw. bei der Werkstückbearbeitung dort verbleibt (Werkstückausreißkontrolle).

Vorzugsweise ist zumindest ein pneumatischer Werkstücksensor vorgesehen, welcher einen zugeordneten Druckluftkanal aufweist, in welchem sich in Abhängigkeit des Zustandes des Werkstücksensors ein Staudruck aufbauen kann, der durch eine Messeinrichtung erfassbar ist. Beispielsweise ist der Werkstücksensor derart ausgebildet, dass der Druckluftkanal seitens des Werkstücksensors geschlossen ist (Staudruck kann sich aufbauen), wenn das Werkstück ordnungsgemäß an dem Werkstückanschlag anliegt und der Werkstücksensor außerdem derart ausgebildet, dass der Druckluftkanal seitens des Werkstücksensors offen ist (kein Staudruck kann sich aufbauen), wenn das Werkstück nicht an dem Werkstückanschlag anliegt.

Im Falle einer Werkstückhalteeinrichtung mit rückziehbaren Werkstück-Spannelementen ergibt sich eine besonders bevorzugte Variante der Erfindung, indem der Druckluftkanal des Werkstücksensors derart geführt ist, dass der Druckluftkanal nur geschlossen ist (Staudruck kann sich aufbauen), wenn die Werkstück-Spannelemente ihre Funktionsstellung, z. B. eine vollständig ausgefahrene Stellung, einnehmen.

Eine weitere Erhöhung der Funktionalität der Werkstücksensorik ergibt sich, wenn zumindest zwei Werkstücksensoren vorgesehen sind.

Die vorstehend und nachfolgend anhand der Figuren beschriebene Ausbildung der Werkstücksensoren einschließlich der zugehörigen Überwachungsmittel wird unabhängig davon, ob die Werkstück-Halteeinrichtung mit Einstellmitteln zum Einstellen der Ausgangsrelativposition der Werkstück-Spannelemente versehen ist, als Erfindung angesehen.

Im Folgenden wird anhand schematischer Zeichnungen ein Ausführungsbeispiel der Erfindung beschrieben. Es zeigen:
- Figur 1:: eine Werkzeugmaschine zum stanzenden Bearbeiten eines Blechs mit einer Werkstück-Bewegungseinheit in einer Draufsicht,
- Fign. 2 bis 5: eine Schnittdarstellung einer Werkstück-Halte-einrichtung der Werkzeugmaschine aus Figur 1

- Fign. 6 und 7: entlang einer vertikalen Schnittebene bei vier verschiedenen Zuständen, Ausschnitte von zwei Schnittdarstellungen der Werkzeug-Halteeinrichtung,
- Fign. 8 und 9: Schnittdarstellungen der Werkstück-Halteeinrichtung entlang zwei verschiedener horizontaler Schnittebenen und
- Fign. 10 bis 12: einen Ausschnitt der Schnittdarstellung gemäß Figur 8 im Bereich eines Werkstückanschlags bei drei verschiedenen Zuständen.

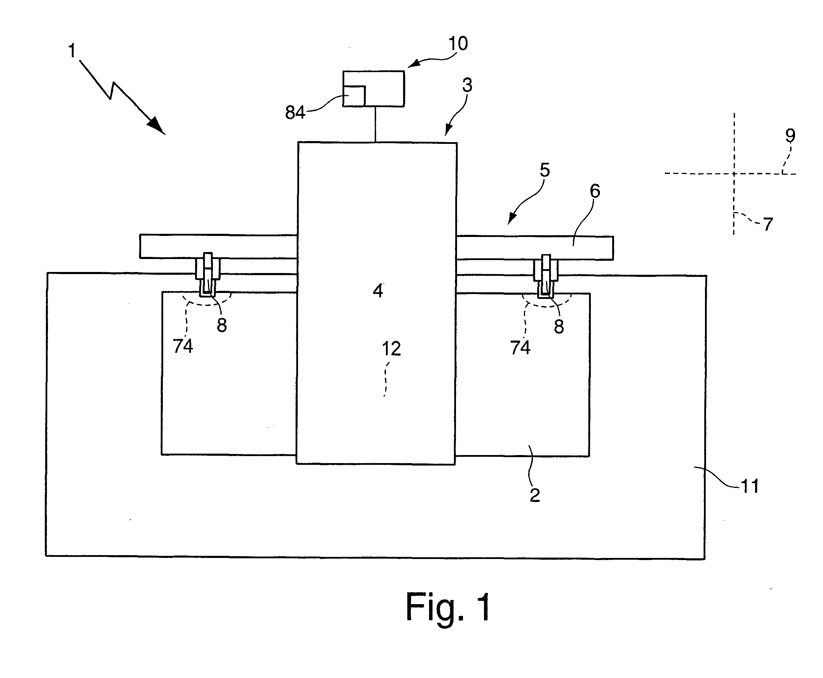

Figur 1 zeigt eine Werkzeugmaschine 1 zum stanzenden Bearbeiten eines ebenen Bleches 2 in einer Draufsicht. Die Werkzeugmaschine 1 weist einen C-förmigen Maschinenrahmen 3 auf. In Figur 1 ist nur der obere Schenkel 4 des C-förmigen Maschinenrahmens 3 zu sehen. Im Rachen des C-förmigen Maschinenrahmens 3 ist eine Werkstück-Bewegungseinheit 5 angeordnet. Die Werkstück-Bewegungseinheit 5 ist als herkömmliche Koordinatenführung ausgebildet. Ein Querbalken 6 der Werkstück-Bewegungseinheit 5 ist entlang einer ersten Bewegungsachse 7 motorisch angetrieben verfahrbar. An dem Querbalken 6 sind zumindest zwei Werkstück-Halteeinrichtungen 8 vorgesehen, welche gemeinschaftlich an dem Querbalken 6 motorisch angetrieben entlang einer zweiten Bewegungsachse 9 verfahrbar sind. Die Bewegungsachsen 7, 9 verlaufen senkrecht zu einander und spannen eine horizontale Bewegungsebene auf.

Das Blech 2 ist mittels der Werkstück-Halteeinrichtungen 8, welche insbesondere als Werkstück-Spannpratzen ausgebildet sind, an der Werkstück-Bewegungseinheit 5 festlegbar und ist - gelagert auf einem Werkstücktisch 11 - in der Bewegungsebene relativ zu einer Stanzeinheit 12 der Werkzeugmaschine 1 bewegbar. Sämtliche Antriebe der Werkzeugmaschine 1 sind mittels einer nummerischen Steuereinheit 10 steuerbar.

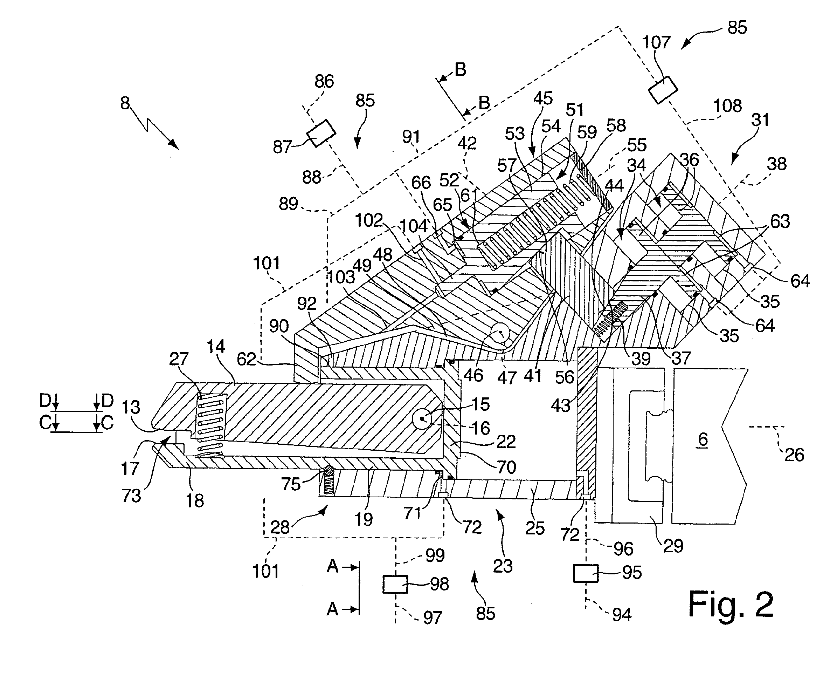

In den Figuren 2 bis 5 ist eine der Werkstück-Halteeinrichtungen 8 in einer Schnittdarstellung entlang einer vertikalen Schnittebene bei vier verschiedenen Zuständen gezeigt. Die Werkstück-Halteeinrichtung 8 weist zwei Werkstück-Spannelemente auf. Ein erstes Spannelement 13 ist an einem Ende einer Spannelement-Halterung in Form eines Spannarms 14 vorgesehen. An dem anderen Ende ist der Spannarm 14 mittels eines Lagerzapfens 15 um eine Schwenkachse 16 schwenkbar gelagert.

Das zweite Spannelement 17 ist an einem Ende einer rinnen- bzw. schnabelförmigen Spannelement-Halterung vorgesehen, welche im Folgenden als Pratzenschnabel 18 bezeichnet wird. Der Pratzenschnabel 18 ist an dem von dem Spannelement 17 abgewandten Ende fest mit einem Führungszylinder 19 verbunden.

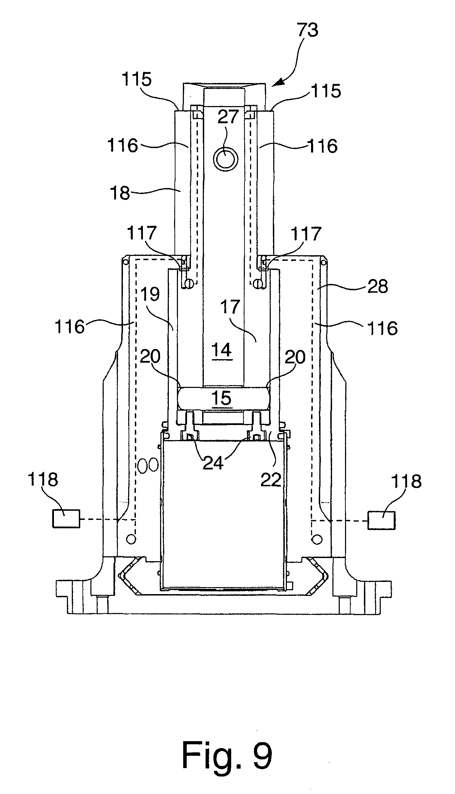

In den Figuren 2 bis 5 ist der Pratzenschnabel 18 und der Führungszylinder 19 stark vereinfacht dargestellt. Insbesondere aus Figur 9 ist ersichtlich, dass der Pratzenschnabel 18 in den Führungszylinder 18 eingeschoben ist und mittels Befestigungsschrauben 24 an der Bodenplatte des Führungszylinders 19 befestigt ist. Bei einem alternativen Ausführungsbeispiel können der Pratzenschnabel 18 und der Führungszylinder 19 aber auch - wie in den Figuren 2 bis 5 aufgrund der vereinfachten Darstellung gezeigt - einstückig ausgebildet sein.

Der Spannarm 14 ragt mit einem Endabschnitt in einen Innenhohlraum des Pratzenschnabels 18. Der Lagerzapfen 15 des Spannarms 14 durchragt den Spannarm 14 senkrecht zur Zeichenebene gemäß den Figuren 2 bis 5. Die Enden des Lagerzapfens 15 sind in Ausnehmungen 20 am Pratzenschnabel 18 angeordnet (Figur 9).

Die Bodenplatte des Führungszylinders 19 bildet zugleich einen Kolben 22 eines Rückziehantriebs 23. Die Bodenplatte bzw. der Kolben 22 ist mit dem Führungszylinder 19 einstückig ausgebildet (Figur 9). Der Kolben 22 ist innerhalb eines Arbeitszylinders 25 des Rückziehantriebs 23 entlang einer Rückziehachse 26 hin und her bewegbar.

Zwischen dem Spannarm 14 und dem Pratzenschnabel 18 ist ein Rückstellfederelement in Form einer Spiralfeder 27 angeordnet. Die Spiralfeder 27 ist einenends in einer Ausnehmung an dem Spannarm 14, anderenends an der Innenseite des Pratzenschnabels 18 abgestützt.

Gemäß Figur 2 ragen die Werkstück-Spannelemente 13, 17 nach links gegenüber der Vorderseite eines Gehäuses 28 der Werkstück-Halteeinrichtung 8 vor. Auf der Rückseite ist das Gehäuse 28 an einer entlang dem Querbalken 6 der Werkstück-Bewegungseinheit 5 in Richtung der Bewegungsachse 9 verschiebbaren Tragschiene 29 befestigt.

An der Oberseite des Gehäuses 28 ist ein Spannantrieb 31 vorgesehen, mittels dessen die Werkstück-Spannelemente 13, 17 ausgehend von einer Ausgangsrelativposition aufeinander zu bewegbar sind, um ein zwischen den Werkstück-Spannelementen 13, 17 angeordnetes Blech 2 einzuspannen. Außerdem sind Einstellmittel 51 vorgesehen, mittels derer die Ausgangsrelativposition der Werkstück-Spannelemente 13, 17 einstellbar ist.

Der Spannantrieb 31 umfasst einen Kolbenzylinderantrieb mit zwei übereinander gestapelten Kolbenzylindereinheiten 34, welche jeweils einen Arbeitszylinder 35 und einen Kolben 36 aufweisen. Alternativ kann ein Kolbenzylinderantrieb mit nur einer oder mit mehr als zwei Kolbenzylindereinheiten vorgesehen sein. Ein erstes Antriebselement 37 ist mit den Kolben 36 des Spannantriebs 31 verbunden und mittels des Spannantriebs 31 entlang einer Spannantriebsachse 38 hin und her bewegbar. Das erste Antriebselement 37 ist über ein Rückstellfederelement in Form einer Spiralfeder 39 an dem Boden einer Ausnehmung des Gehäuses 28 abgestützt.

Ein zweites Antriebselement 41 ist entlang einer senkrecht zur Spannantriebsachse 38 verlaufenden Verschiebeachse 42 verschiebbar im Gehäuse 28 gelagert. Das zweite Antriebselement 41 weist an einer Stirnfläche eine Keilfläche 43 auf, welche mit einer parallelen Keilfläche 44 an einer Seitenlängsfläche des ersten Antriebselements 37 zusammenwirkt. Die Keilflächen 43, 44 verlaufen in einem spitzen Winkel zur Spannantriebsachse 38. Es ergibt sich ein Keilmechanismus bzw. Keilgetriebe mit einer Übersetzung, aufgrund derer eine Antriebskraft des Spannantriebs 31 in eine um vorzugsweise ein Mehrfaches größere an den Werkstück-Spannelementen 13, 17 wirksame Spannkraft übersetzt werden kann.

Das von dem ersten Antriebselement 37 abgewandte Ende des zweiten Antriebselementes 41 steht über das Gehäuse 28 der Werkstück-Halteeinrichtung 8 vor. Es ragt in eine Umlenkeinrichtung 45, die mittels eines Lagerzapfens 46 an der Oberseite des Gehäuses 28 der Werkstück-Halteeinrichtung 8 um eine horizontale Schwenkachse 47 gelagert ist, die parallel zur Schwenkachse 16 des Schwenkarms 14 verläuft. Zur Lagerung des Lagerzapfens 46 weist das Gehäuse 28 eine Einbuchtung 48 auf, in welcher eine entsprechende Ausbuchtung 49 der Umlenkeinrichtung 45 angeordnet ist. An den entlang der Schwenkachse 47 gegenüberstehenden Seitenwänden der Einbuchtung 48 sind die Enden des Lagerzapfens 46 gelagert.

Die Einstellmittel 51 zum Einstellen einer Ausgangsrelativposition der Werkstück-Spannelemente 13, 17 sind platzsparend in der Umlenkeinrichtung 45 untergebracht. Die Einstellmittel 51 weisen einen als Kolbenzylinderantrieb ausgebildeten Stellantrieb 52 auf. Der Kolben 53 des Stellantriebs 52 ist innerhalb eines Arbeitszylinders 54 entlang einer Stellantriebsachse 55 verschiebbar. Die Umgangsfläche des zylindrischen Kolbens 53 ist mit einer Ausnehmung versehen, durch welche sich eine Keilfläche 56 ausbildet, an welcher eine ballige Stirnfläche 57 des zweiten Antriebselementes 41 anliegt. Der Kolben 53 bildet folglich ein mit der Keilfläche 56 versehenes Einstellbauteil, welches entlang einer mit der Stellantriebsachse 55 zusammenfallenden Stellachse verstellbar ist.

Die kolbenseitige Keilfläche 56 verläuft in einem stumpfen Winkel, insbesondere in Abhängigkeit bei Schwenkstellung der Umlenkeinrichtung 45 in einem Winkel von 90 ± 2 °, z. B. bei der in Figur 2 gezeigten Schwenkstellung der Umlenkeinrichtung 45 in einem Winkel von 88,5 ° zur Verschiebeachse 42 des zweiten Antriebselementes 41. Zwischen dem Kolben 53 des Stellantriebs 52 und einem Boden 58 des Arbeitszylinders 54 des Stellantriebs 52 ist ein Rückstellfederelement in Form einer Spiralfeder 59 angeordnet. Das kolbenseitige Ende der Spiralfeder 59 ist in einer axialen Ausnehmung 61 an dem Kolben 53 angeordnet.

Die Umlenkeinrichtung 45 beaufschlagt den Spannarm 14 über ein an der Oberseite des Spannarms 14 anliegendes Druckelement 62.

Sowohl der Spannantrieb 31 als auch der Stellantrieb 52 sind als einfachwirkende Kolbenzylinderantriebe ausgebildet, d. h. die Kolben 36, 53 werden nur einseitig mit einem Arbeitsmedium beaufschlagt. Im Falle des Spannantriebs 31 werden nur die Kolbenflächen 63 der Kolben 36 mit einem Arbeitsmedium beaufschlagt, welches über Zuleitungen 64 zugeführt werden kann. Als Arbeitsmedium für den Spannantrieb 31 wird vorzugsweise Druckluft mit einem Druck von z. B. 6 bar verwendet.

Im Falle des Stellantriebs 52 wird nur die Kolbenfläche 65 des Kolbens 53 mit einem Arbeitsmedium beaufschlagt, das über eine Zuleitung 66 zugeführt werden kann. Als Arbeitsmedium wird ebenfalls bevorzugt Druckluft, z. B. mit einem Druck von 6 bar, verwendet.

Im Unterschied zu dem Spannantrieb 31 und dem Stellantrieb 52 ist der Rückziehantrieb 23 als doppelwirkender Kolbenzylinderantrieb ausgebildet. Sowohl die Kolbenfläche 70 als auch die ringförmige Kolbenfläche 71 sind über getrennte Zuleitungen 72 mit einem Arbeitsmedium, vorzugweise mit Druckluft mit einem Druck von z. B. 6 bar, beaufschlagbar.

Im Folgenden wird die Funktionsweise der Werkstück-Halteeinrichtung 8 im Detail anhand der in den Figuren 2 bis 5 gezeigten, unterschiedlichen Zustände der Werkstück-Halteeinrichtung 8 beschrieben.

In Figur 2 ist die Werkstück-Halteeinrichtung 8 in einer geöffneten Stellung gezeigt, d. h. die Werkstück-Spannelemente 13, 17 sind in einer maximalen Öffnungsstellung zueinander angeordnet. Die Kolben 36 des Spannantriebs 31 nehmen eine Endstellung ein, in welcher sie in Figur 2 vollständig nach rechts oben geschoben sind. Wenn die Kolben 36 diese obere Endstellung einnehmen, sind die Werkstück-Spannelemente 13, 17 bezogen auf den Spannantrieb 31 in einer Ausgangsrelativposition angeordnet.

Außerdem ist auch der Stellantrieb 52 gemäß Figur 2 in einer Endstellung angeordnet. Der Kolben 53 des Stellantriebs 52 ist in Figur 2 vollständig nach links unten geschoben. Die Umlenkeinrichtung 45 ist in einer Ausgangsschwenkposition angeordnet, von der ausgehend sie relativ zu dem Gehäuse 28 der Werkstück-Halteeinrichtung 8 nur entgegen dem Uhrzeigersinn um die Schwenkachse 47 geschwenkt werden kann.

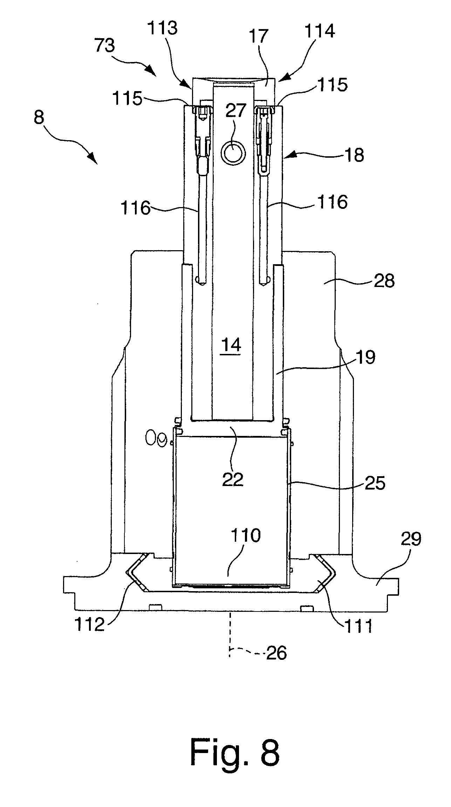

Bei vollständig geöffneten Werkstück-Spannelementen 13, 17, wie in Figur 2 gezeigt, wird der Rand eines festzulegenden Bleches 2 zwischen die Werkstück-Spannelemente 13, 17 eingeführt, bis er an einem Werkstückanschlag 73 zu Anlage kommt, der an dem Pratzenschnabel 18 ausgebildet ist. Der Werkstückanschlag 73 ist mit zwei Werkstücksensoren versehen, deren Aufbau und Funktionsweise später anhand der Figuren 8 bis 12 erläutert wird.

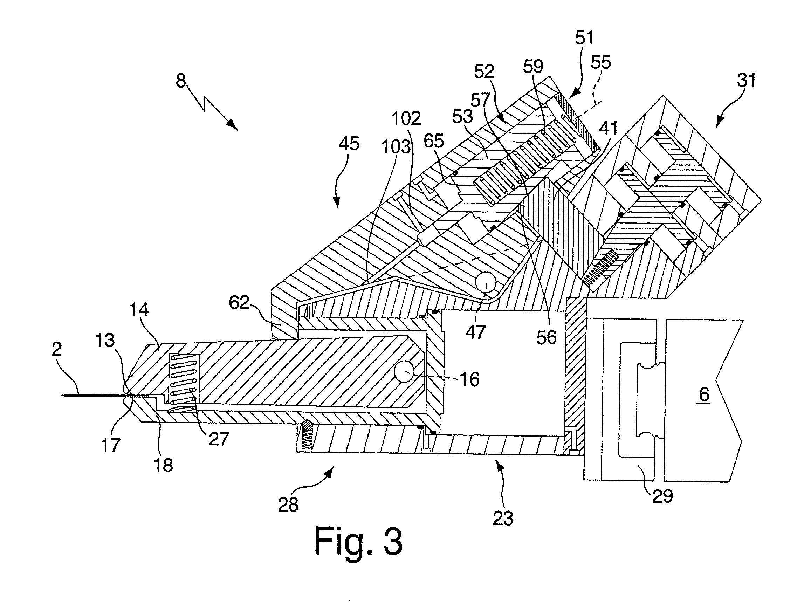

Nachdem der Blechrand zwischen den Werkstück-Spannelementen 13, 17 angeordnet wurde, wird zunächst mittels des Stellantriebs 52 die Ausgangsrelativposition der Werkstück-Spannelemente 13, 17 derart eingestellt, dass die Werkstück-Spannelemente 13, 17 mit einer Vorspannkraft an gegenüberliegenden Seiten des Bleches 2 anliegen. Die Werkstück-Spannelemente 13, 17 werden folglich mittels des Stellantriebs 52 geschlossen. Es ergeben sich die in Figur 3 gezeigten Verhältnisse.

Im Einzelnen erfolgt die Einstell- bzw. Schließbewegung der Werkstück-Spannelemente 13, 17, indem dem Arbeitszylinder 54 des Stellantriebs 52 über die Zuleitung 66 Druckluft zugeführt wird. Der Kolben 53 wird daraufhin entlang der Stellantriebsachse 55 in Figur 2 nach rechts oben verschoben. Die Spiralfeder 59 wird zunehmend komprimiert. Die Keilfläche 56 an dem Kolben 53 verfährt entlang der balligen Stirnfläche 57 des zweiten Antriebselementes 41. Aufgrund der Neigung der Keilfläche 56 gegenüber der Stellantriebsachse 55 wird die Umlenkeinrichtung 45 entgegen dem Uhrzeigersinn in Figur 2 um die Schwenkachse 47 geschwenkt. Dank der balligen Ausbildung der Stirnfläche 57 wird ein Verkanten der Stirnfläche 57 mit der Keilfläche 56 verhindert.

Durch die Schwenkbewegung der Umlenkeinrichtung 45 wird der Schwenkarm 14 unter Beaufschlagung des Druckelementes 62 ebenfalls entgegen dem Uhrzeigersinn in Figur 2 um die Schwenkachse 16 geschwenkt. Das an dem Spannarm 14 vorgesehene Spannelement 13 wird auf das untere Spannelement 17 zu bewegt. Die Spiralfeder 27 wird zunehmend komprimiert.

Die Einstellbewegung wird fortgesetzt, bis sich aufgrund der durch die Spiralfedern 27, 59 bewirkten Rückstellkräfte und der Vorspannkraft, mit welcher die Werkstück-Spannelemente 13, 17 das Blech 2 einspannen, eine der Antriebskraft des Stellantriebs 52 betragsmäßig entsprechende Gegenkraft aufbaut. Die Umlenkeinrichtung 45 nimmt eine vorgegebene Ausgangsschwenkstellung und die Werkstück-Spannelemente 13, 17 nehmen eine vorgegebene Ausgangsrelativposition ein.

Das Blech 2 ist bei diesen Verhältnissen noch nicht ausreichend fest zwischen den Werkstück-Spannelementen 13, 17 eingespannt, um ein Herausrutschen des Bleches 2 bei einem hochdynamischen Bewegen des Bleches 2 mittels der Werkstück-Bewegungseinheit 5 sicher auszuschließen.

Um das Blech 2 mit einer ausreichenden Spannkraft zwischen den Werkstück-Spannelementen 13, 17 einzuspannen, ist der Spannantrieb 31 vorgesehen, mittels dessen die Werkstück-Spannelemente 13, 17 ausgehend von der in Figur 3 gezeigten Ausgangsrelativposition aufeinander zu bewegt werden können. Da die Werkstück-Spannelemente 13, 17 in der mittels des Stellantriebs 52 eingestellten Ausgangsrelativposition bereits mit einer Vorspannkraft an dem Blech 2 anliegen, müssen die Werkstück-Spannelemente 13, 17 nur noch um einen sehr kleinen Weg bzw. Hub aufeinander zu bewegt werden. Der Hub wird insbesondere durch die Elastizität des Blechs 2 bestimmt und kann beispielsweise nur wenige µm aufweisen.

Zum Spannen werden die Arbeitszylinder 35 des Spannantriebs 31 mit Druckluft beaufschlagt, so dass das erste Antriebselement 37 in Figur 3 entlang der Spannantriebsachse 38 nach links unten entgegen der Spiralfeder 39 verschoben wird.

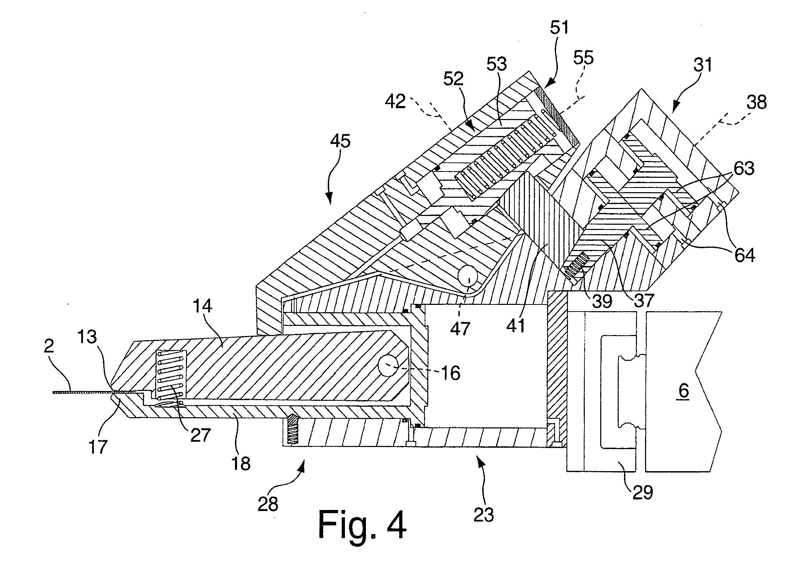

Aufgrund der Verschiebung des ersten Antriebselementes 37 wird das zweite Antriebselement 41 entlang seiner Verschiebeachse 42 in Figur 3 nach links oben auf den Kolben 53 des Stellantriebs 52 zu geschoben. Dies hat zur Folge, dass die Umlenkeinrichtung 45 weiter entgegen dem Uhrzeigersinn in Figur 3 geschwenkt wird, bis sich die in Figur 4 gezeigten Verhältnisse einstellen. Das Blech 2 ist nun mit einer hohen Spannkraft zwischen den Werkstück-Spannelementen 13, 17 eingespannt. Aufgrund des Zusammenwirkens der Keilflächen 43, 44 sowie der Hebelverhältnisse an der Umlenkeinrichtung 45 und an dem Spannarm 14 kann mittels des Spannantriebs 31 eine relativ hohe Spannkraft zwischen den Werkstück-Spannelementen 13, 17 ausgebildet werden.

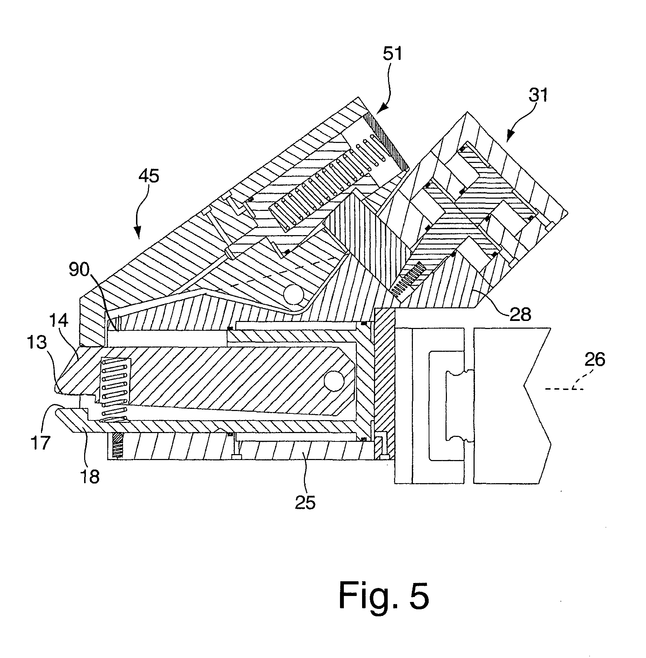

Damit das Blech 2 mittels der Stanzeinheit 12 auch im Nahbereich 74 bzw. Spannbereich (Figur 1) der Werkstück-Halteeinrichtung 8 bearbeitet werden kann, ist die Werkstück-Halteeinrichtung 8 mit dem Rückziehantrieb 23 versehen. Mittels des Rückziehantriebs 23 können der Spannarm 14 und der Pratzenschnabel 18 mitsamt den Werkstück-Spannelementen 13, 17 entlang der Rückziehachse 26 ausgehend von der z.B. in Figur 2 gezeigten Funktionsstellung in eine in Figur 5 gezeigte Rückzugsstellung verschoben werden. In der Rückzugsstellung sind der Spannarm 14 und der Pratzenschnabel 18 platzsparend zumindest teilweise in dem Arbeitszylinder 25 des Rückziehantriebs 23 angeordnet.

Damit das Blech 2 sicher an der Werkstück-Bewegungseinheit 5 festgelegt ist, wenn die Werkstück-Spannelemente 13, 17 einer Werkstückhalteinrichtung 18 zurückgezogen sind, können im Falle einer Variante der Werkzeugmaschine 1 vorzugsweise auch drei oder mehr Werkstückhalteeinrichtungen 8 vorgesehen sein, so dass das Blech 2 immer von zumindest zwei Werkstückhalteeinrichtung 8 gehalten werden kann.

Aus den Figuren 2 bis 5 ist ersichtlich, dass die Kolbenfläche 70, welche für die Ausschubbewegung mit Druckluft beaufschlagt wird, relativ groß ist, während die Kolbenfläche 71 für die entgegengerichtete Rückziehbewegung als relativ kleine Ringfläche ausgebildet ist. Dies hat den Vorteil, dass einerseits die Werkstück-Spannelemente 13, 17 in der Funktionsstellung aufgrund der Druckbeaufschlagung der großen Kolbenfläche 70 durch eine relativ große (Gegen-)Kraft an einem Verschieben in Richtung der Rückzugsstellung gehindert sind.

Andererseits ist aufgrund der relativ kleinen Kolbenfläche 71 das Volumen an Druckluft relativ klein, welches für die Rückziehbewegung in den Arbeitszylinder 25 des Rückziehantriebs 23 einzubringen ist. Dank dieser Maßnahme können die Werkstück-Spannelemente 13, 17 trotz eines relativ kleinen Anschlussquerschnitts der Zuleitung 72 usw. mit einer hohen Geschwindigkeit in die Rückzugsstellung bewegt werden.

Eine federbeaufschlagte Rastkugel 75, welche in einer Kerbe an der Unterseite des Pratzenschnabels 18 eingreifen kann, wenn die Werkstück-Spannelemente 13, 17 die Funktionsstellung einnehmen, wirkt zusätzlich einem unerwünschten Verschieben der Werkstück-Spannelemente 13, 17 aus der Funktionsstellung in die Rückzugsstellung entgegen.

Solange kein Blech 2 an der Werkstück-Halteeinrichtung 8 eingespannt ist, werden die Werkstück-Spannelemente 13, 18 folglich durch die federbeaufschlagte Rastkugel 75 und vor allem durch die Druckbeaufschlagung der Kolbenfläche 70 des Kolbens 22 des Rückziehantriebs 23 in der Funktionsstellung gehalten. Dies ist insbesondere beim Einlegen des Blechs 2 in die Werkstückhalteeinrichtung 8 von Bedeutung.

Wenn ein Blech 2 an der Werkstück-Halteeinrichtung 8 eingespannt ist (Figur 4), wird ein Verschieben der Werkstück-Spannelemente 13, 17 in Richtung der Rückzugsstellung zusätzlich durch einen Reibschluss zwischen dem Druckelement 62 und der Oberseite des Spannarms 14 gehemmt.

Außerdem wird durch eine besondere Gestaltung der Unterseite des Pratzenschnabels 18 die Reibung zwischen dem Pratzenschnabel 18 und einer Führungsfläche 76 an dem Gehäuse 28 der Werkstück-Halteeinrichtung 8 erhöht. Auf diese Weise wird zusätzlich einem unerwünschten Verrutschen des Pratzenschnabels 18 und mit diesem der Werkstück-Spannelemente 13, 17 entgegengewirkt, wenn ein Blech 2 zwischen den Werkstück-Spannelementen 13, 17 eingespannt ist.

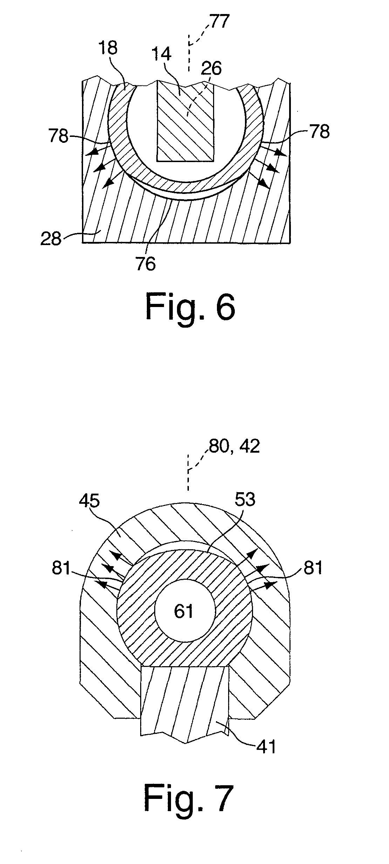

Figur 6 zeigt eine Schnittdarstellung entlang der in Figur 2 mit A-A angedeuteten Schnittebene. Ausschnittsweise sind der Spannarm 14, der Pratzenschnabel 18 und das Gehäuse 28 dargestellt. Im gespannten Zustand der Werkstück-Spannelemente 13, 17 wird der Pratzenschnabel 18 entlang einer in Figur 6 gezeigten Beaufschlagungsachse 77 auf die Führungsfläche 76 an dem Gehäuse 28 gepresst. Dabei beaufschlagt der Pratzenschnabel 18 zwei Flächenabschnitte 78 der Führungsfläche 76, welche zueinander geneigt sind. Der Pratzenschnabel 18 wird folglich nicht auf einen senkrecht zur Beaufschlagungsachse 77 verlaufenden Flächenabschnitt gedrückt. Aufgrund einer mittigen Freimachung sind die Flächenabschnitte 78, auf welche der Pratzenschnabel 18 gepresst wird, quer zur Beaufschlagungsachse 77 und quer zur Rückziehachse 26 (in Figur 6 senkrecht zur Zeichenebene) voneinander beabstandet.

In Figur 6 sind die Komponenten der Anpresskraft angedeutet, mit welcher der Pratzenschnabel 18 auf die Führungsfläche 76 gepresst wird. Die zur Beaufschlagungsachse 77 in einem Winkel verlaufenden Komponenten (Normalkräfte) sind dem Betrag nach in Summe größer als die Beaufschlagungskraft. Da die Reibung zwischen Pratzenschnabel 18 und Führungsfläche 76 von der Summe der Normalkräfte abhängig ist, wird durch die Normalkraft-Erhöhung die Reibung zwischen dem Pratzenschnabel 18 und der Führungsfläche 76 erhöht. Bei gespannten Werkstück-Spannelementen 13, 17 wirkt folglich eine erhöhte Reibung entgegen einem Verschieben des Pratzenschnabels 18 mitsamt den Werkstück-Spannelementen 13, 17 aus der Funktionsstellung in die Rückzugsstellung.

In analoger Weise wird ein unerwünschtes Verrutschen des als Einstellbauteil dienenden Kolbens 53 des Stellantriebs 52 entlang der Stellantriebsachse 55 verhindert. So ist eine Gleitführung des Kolbens 53 innerhalb des Arbeitszylinders 54 des Stellantriebs 52 zum Zwecke einer im gespannten Zustand der Werkstück-Halteeinrichtung 8 möglichst hohen Reibung ausgestaltet. Im Detail wird dies anhand des in Figur 7 gezeigten Ausschnitts einer Schnittdarstellung entlang der in Figur 2 angedeuteten Schnittebene B-B erläutert.

In Figur 7 sind der Kolben 53 sowie der Arbeitszylinder 54 im Querschnitt und ein Endabschnitt des zweiten Antriebselementes 41 dargestellt. Wenn die Werkstück-Spannelemente 13, 17 ein Blech 2 mit einer Spannkraft einspannen, beaufschlagt das zweite Antriebselement 41 den Kolben 53 entlang einer Beaufschlagungsachse 80, die mit der Verschiebesachse 42 des zweiten Antriebselementes 41 zusammenfällt. Aufgrund der Beaufschlagung durch das zweite Antriebselement 41 wird der Kolben 53 auf zwei Flächenabschnitte 81 der Innenseite des Arbeitszylinders 54 des Stellantriebs 52 gepresst. Die Innenseite des Arbeitszylinders 54 bildet eine Führungsfläche für den Kolben 53 entlang der Stellantriebsachse 55. In Figur 7 verläuft die Stellantriebsachse 55 senkrecht zur Zeichenebene.

Entsprechend zu den Verhältnissen an der Unterseite des Pratzenschnabels 18 ergibt sich durch eine mittige Freimachung zwischen dem Kolben 53 und der Innenseite des Arbeitszylinders 54 eine betragsmäßige Erhöhung der Summe der Normalkräfte, mit welcher der Kolben an der Innenseite des Arbeitszylinders 54 anliegt. Die Normalkräfte sind in Figur 7 angedeutet. Aus der Normalkraft-Erhöhung resultiert wiederum eine Erhöhung der Reibung, durch welche einem unerwünschten Verrutschen des Kolbens 53 entgegengewirkt wird.

Im Übrigen ist die Neigung der Keilfläche 56 an dem Kolben 53 derart gewählt, dass sich eine Selbsthemmung des Kolbens 53 ergibt.

Zur Steuerung der Werkstück-Halteeinrichtung 8 dient ein Steuermodul 84, das Teil der numerischen Steuereinheit 10 der Werkzeugmaschine 1 ist (Figur 1). Mittels des Steuermoduls 84 können Druckluftsysteme 85 zum Zuführen oder Abführen von Druckluft von den Antrieben 23, 31, 52 der Werkstück-Halteeinrichtung 8 gesteuert werden. Insbesondere weisen die Druckluftsysteme 85 verschiedene Druckluftleitungen und durch das Steuermodul gesteuerte Steuermittel in Form von Ventilen auf, welche zumindest teilweise im Gehäuse 28 der Werkstück-Halteeinrichtung 8 untergebracht sind. Teile der Druckluftsysteme 85 sind in Figur 2 schematisch angedeutet.

Das Druckluftsystem 85 für den Stellantrieb 52 weist eine Druckluftversorgungsleitung 86 auf, an welcher Druckluft von ca. 6 bar anliegt. Die Druckluftversorgungsleitung 86 ist über ein Durchlassventil 87, welches mittels des Steuermoduls 84 steuerbar ist, mit einer an dem Arbeitszylinder 54 des Stellantriebs 52 angeschlossenen Druckluftleitung 88 verbunden. Eine zweite Druckluftleitung 89 zweigt von der Druckluftleitung 88 ab und ist an einer Auslassöffnung 90 angeschlossen. Außerdem zweigt eine dritte Druckluftleitung 91 von der ersten Druckluftleitung 88 ab, auf deren Funktion später eingegangen wird.

Die Auslassöffnung 90 ist über einen Druckluftkanal 92 an der Druckluftleitung 89 angeschlossen, welcher durch eine Bohrung im Gehäuse 28 der Werkstück-Halteeinrichtung 8 gebildet ist. Wenn die Werkstück-Spannelemente 13, 17 in der Funktionsstellung angeordnet sind (Figur 2), ist die Auslassöffnung 90 durch den Führungszylinder 19 des Pratzenschnabels 18 verschlossen. Wenn die Werkstück-Spannelemente 13, 17 außerhalb der Funktionsstellung angeordnet sind (z. B. Figur 5), ist die Auslassöffnung 90 zur Umgebung der Werkstück-Halteeinrichtung 8 hin offen und die Druckluft in den Druckleitungen 88, 89, 91 kann entweichen.

Durch diese Anordnung wird verhindert, dass der Kolben 53 des Stellantriebs 52 betätigt werden kann, solange die Werkstück-Spannelemente 13, 17 nicht entlang der Rückziehachse 26 in der Funktionsstellung angeordnet sind. Dank dieser Maßnahme kann das Durchlassventil 87 bereits während einer Ausschubbewegung der Werkstück-Spannelemente 13, 17 geöffnet werden, ohne dass der Stellantrieb 52 vorzeitig anfährt. Erst wenn die Werkstück-Spannelemente 13, 17 die Funktionsstellung erreicht haben, ist die Auslassöffnung 90 durch den Führungszylinder 19 verschlossen und es kann sich ein Druck im Arbeitszylinder 54 des Stellantriebs 52 aufbauen, durch welchen der Kolben 53 verschoben werden kann.

Das Druckluftsystem 85 für den Rückziehantrieb 23 weist eine Druckluftversorgungsleitung 94, ein Durchlassventil 95 und eine Druckluftleitung 96 auf, welche an denjenigen Zylinderraum des Arbeitszylinders 25 angeschlossen sind, der der großen Kolbenfläche 70 zugeordnet ist. Eine weitere Druckluftversorgungsleitung 97, ein weiteres Durchlassventil 98 und eine weitere Druckluftleitung 99 sind an dem anderen Zylinderraum des Arbeitszylinders 25 angeschlossen. An beiden Druckluftversorgungsleitungen 94, 97 liegt Druckluft von ca. 6 bar an.

Von der Druckluftleitung 99 zweigt eine zweite Druckluftleitung 101 ab, die in einen Druckluftkanal 102 mündet, der durch eine Bohrung an der Umlenkeinrichtung 45 gebildet ist. Der Druckluftkanal 102 ist über einen unteren Zylinderraum des Arbeitszylinders 54 des Stellantriebs 52 zu einer Auslassöffinung 103 geführt. Der untere Zylinderraum ist durch einen zylindrischen Fortsatz 104 des Kolbens 53 gegenüber dem restlichen Innenraum des Arbeitszylinders 54 abgedichtet.

Wenn der Kolben 53 in der unteren Endstellung angeordnet ist (Figur 2), verschließt der Fortsatz 104 den Druckluftkanal 102 zur Auslassöffnung 103 hin. Wenn der Kolben 53 eine andere Stellung entlang der Stellantriebsachse 55 einnimmt (z. B. Figur 3), ist der Druckluftkanal 102 bzw. die Auslassöffnung 103 offen, so dass Druckluft aus den Druckluftleitungen 99, 101 in die Umgebung der Werkstück-Halteeinrichtung 8 entweichen kann. Folglich kann die ringförmige Kolbenfläche 71 des Kolbens 22 des Rückziehantriebs 23 nur mit Druckluft beaufschlagt werden, wenn der Stellantrieb 52 den in z. B. Figur 2 gezeigten Zustand einnimmt, d. h. die Werkstück-Spannelemente 13, 17 in Bezug auf den Stellantrieb 52 maximal geöffnet sind.

Dank dieser Anordnung kann das Durchlassventil 98 bereits während des Öffnens der Werkstück-Spannelemente 13, 17 geöffnet werden, ohne dass die Gefahr eines vorzeitigen Anfahrens des Rückziehantriebs 23 besteht. Die federbeaufschlagte Rastkugel 75 verhindert, dass die Werkstück-Spannelemente 13, 17 durch einen trotz der geöffneten Auslassöffnung 103 bestehenden Restdruck vorzeitig eingezogen werden.

Das Druckluftsystem 85 für den Spannantrieb 31 weist ein Durchlassventil 107 und Druckluftleitungen 108 auf, welche an die Arbeitszylinder 35 des Spannantriebs 31 angeschlossen sind. Das Druckluftsystem 85 für den Spannantrieb 31 wird über die abgezweigte Druckluftleitung 91 mit Druckluft versorgt, die an dem Durchlassventil 107 angeschlossen ist. Das Durchlassventil 107 ist in Abhängigkeit des Druckes im Arbeitszylinder 54 des Stellantriebs 52 geöffnet oder geschlossen. Beispielsweise ist es als Rückschlagventilkombination mit Federvorspannung ausgebildet. Mittels der Druckluftleitung 91 wird der Druck im Arbeitszylinder 54 des Stellantriebs 52 abgegriffen und dem Durchlassventil 107 zugeführt. Das Durchlassventil 107 ist derart eingestellt, dass es nur geöffnet ist, wenn sich im Arbeitszylinder 54 des Stellantriebs 52 ein Schaltdruck von mindestens 4 bar eingestellt hat. Dies ist nur der Fall, wenn die Werkstück-Spannelemente 13, 17 an dem Blech 2 anliegen und dieses mit einer gewissen Vorspannkraft einspannen. Auf diese Weise ist gewährleistet, dass der Spannantrieb 31 nur betätigt werden kann, wenn der Stellantrieb 52 die Werkstück-Spannelemente 13, 17 bereits an dem Blech 2 anlegt hat.

Die Druckluftsysteme 85 der Werkstück-Halteeinrichtung 8 zeichnen sich durch eine hohe Funktionssicherheit und kurze Schaltzeiten aus. Es versteht sich, dass die Druckluftsysteme 85 zusätzliche, nicht gezeigte Mittel zum schnellen Ablassen von Druckluft aus den Arbeitszylindern 25, 35, 54 aufweisen, um einen jeweiligen Rückhub auslösen zu können. Insbesondere können zu diesem Zweck Schnellentlüftungsventile vorgesehen sein.

In Figur 8 ist eine Schnittdarstellung der Werkstück-Halteeinrichtung 8 entlang einer in Figur 2 angedeuteten, horizontalen Schnittebene C-C gezeigt. Im Unterschied zu Figur 2 sind die Werkstück-Spannelemente 13, 17 in Figur 8 geschlossen.

Ausweislich der Figur 8 ist die Werkstück-Halteeinrichtung 8 an der Tragschiene 29 der Werkstück-Bewegungseinheit 5 entlang einer vertikalen Verschiebeachse 110 verschiebbar geführt. Hierzu ist ein Schlitten 111, an welchem das Gehäuse 28 der Werkstück-Halteeinrichtung 8 befestigt ist, in einer Walzführung 112 an der Tragschiene 29 angeordnet. Ausgehend von einer Ruhestellung ist die gesamte Werkstück-Halteeinrichtung 8 entlang der Verschiebeachse 110 höhenbeweglich.

Beispielsweise kann die Werkstück-Halteeinrichtung 8 dadurch nach oben geschoben werden, dass an dem eingespannten Blech 2 in der Nähe der Werkstück-Halteeinrichtung 8 eine Umformung eingebracht wird. Die Rückstellbewegung der Werkstück-Halteeinrichtung 8 in die Ruheposition kann allein durch Schwerkraftwirkung oder z. B. durch einen nicht gezeigten pneumatischen Antrieb erfolgen.

Außerdem ist der Figur 8 zu entnehmen, dass die Werkstück-Halteeinrichtung 8 einen Werkstückanschlag 73 aufweist, welcher mit zwei Werkstücksensoren 113 und 114 versehen ist. Der Werkstückanschlag 73 ist an dem Pratzenschnabel 18 angeordnet und begrenzt das durch das Schnabelende ausgebildete Werkstück-Spannelement 17. Der Werkstückanschlag 73 weist zwei vertikale Anschlagflächen 115 auf, zwischen denen das vordere Ende des Spannarms 14 angeordnet ist. In den Anschlagflächen 115 ist jeweils einer der Werkstücksensoren 113, 114 eingebracht.

Zu den Werkstücksensoren 113, 114 sind durch Bohrungen ausgebildete Druckluftkanäle 116 geführt. Der Verlauf der Druckluftkanäle 116 innerhalb der Werkstück-Halteeinrichtung 8 wird insbesondere in Figur 9 verdeutlicht, welche eine Schnittdarstellung der Werkstück-Halteeinrichtung 8 entlang einer horizontalen Schnittebene zeigt, die in Figur 2 mit D-D bezeichnet ist. Die Abschnitte der Druckluftkanäle 116, welche in Figur 9 gestrichelt gezeichnet sind, verlaufen oberhalb oder unterhalb der in Figur 9 gezeigten Schnittebene.

Die Abschnitte der Druckluftkanäle 116, welche im Pratzenschnabel 18 verlaufen, münden einenends bei den Werkstücksensoren 113, 114 anderenends an Anlageflächen 117, mit welchen der Pratzenschnabel 18 an dem Gehäuse 28 in Richtung der Ausschubbewegung des Pratzenschnabels 18 anliegt, wenn die Werkstück-Spannelemente 13, 17, wie in Figur 9 gezeigt, ihre Funktionsstellung einnehmen. Von dort aus sind die Druckluftkanäle 116 innerhalb des Gehäuses 28 fortgeführt. Wenn die Werkstück-Spannelemente 13, 17 nicht in der Funktionsstellung angeordnet sind, sind die Druckluftleitungen 116 folglich am Übergang zwischen Pratzenschnabel 18 und Gehäuse 28 offen.

Des Weiteren sind zwei Messeinrichtungen 118 vorgesehen, mittels derer erfasst werden kann, ob ein Staudruck in den Druckluftkanälen 116 vorliegt.

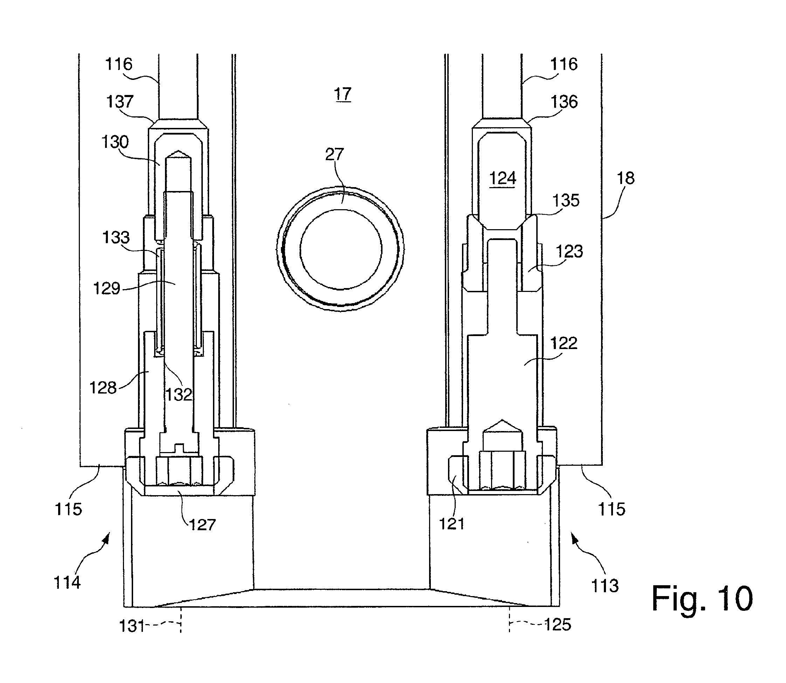

Der Aufbau der Werkstücksensoren 113, 114 wird im Folgenden anhand der Figuren 10 bis 12 erläutert, in welchen ein Ausschnitt von Figur 8 bei drei verschiedenen Zuständen vergrößert dargestellt ist. In den Figuren 10 bis 12 ist der Spannarm 14 nicht dargestellt, damit das Schnabelende des Pratzenschnabels 17 nicht verdeckt ist. Das Schnabelende ist mit einer mittigen Werkstückanlagefläche und seitlichen Anlaufschrägen versehen.

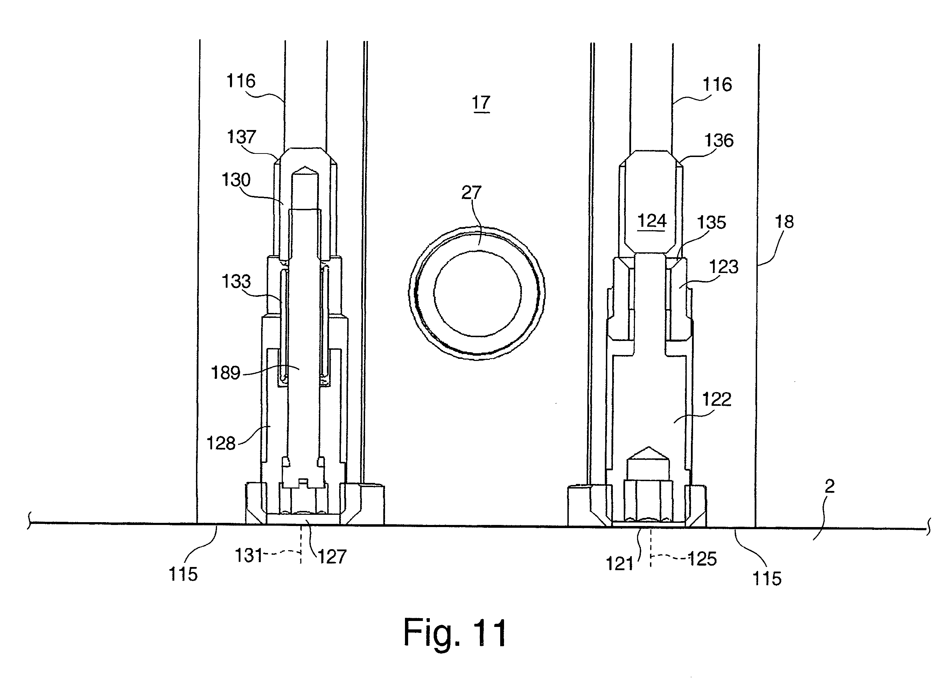

Die Werkstücksensoren 113, 114 sind unterschiedlich aufgebaut. Der in Figur 10 rechts angeordnete Werkstücksensor 113 umfasst ein Werkstück-Anlageelement 121, einen Steuerstößel 122, einen Schraubeinsatz 123 und eine Steuernocke 124. Das Werkstück-Anlageelement 121 ist an dem Steuerstößel 122 befestigt. Gemeinsam mit dem Steuerstößel 122 ist das Werkstück-Anlageelemente 121 entlang der Längsachse 125 des Endabschnitts des Druckluftkanals 115 zwischen den in den Figuren 10 und 11 gezeigten Stellungen verschiebbar. Gemäß Figur 10 steht das Werkstück-Anlageelement 121 gegenüber der Anschlagfläche 115 vor und gemäß Figur 11 fluchtet seine Vorderseite mit der Anschlagfläche 115.

Der Schraubeinsatz 123 ist fest in den Druckluftkanal 116 eingeschraubt. Die Steuernocke 124 ist innerhalb des Druckluftkanals 116 entlang der Längsachse 125 zwischen zwei Stellungen verschiebbar, die ebenfalls den Figuren 10 und 11 zu entnehmen sind.

Der in Figur 10 auf der linken Seite gezeigte Werkstücksensor 114 weist ein Werkstück-Anlageelement 127, eine Anlageelement-Halterung 128, einen Steuerstößel 129 und eine Steuernocke 130 auf. Das Werkstück-Anlageelement 127 ist fest mit der Anlageelement-Halterung 128 verbunden.- Der Steuerstößel 129 ist fest mit der Steuernocke 130 verbunden.

Die Einheit aus Werkstück-Anlageelement 127 und Anlageelement-Halterung 128 sowie die Einheit aus Steuerstößel 129 und Steuernocke 130 sind zwischen den in den Figuren 10 und 11 gezeigten Stellungen entlang der Längsachse 131 des Endabschnitts des linken Druckluftkanals 116 verschiebbar.

In Figur 10 steht das Werkstück-Anlageelement 127 gegenüber der Anschlagfläche 115 vor. In Figur 11 fluchten die Vorderseite des Werkstück-Anlageelementes 127 mit den Anschlagfläche 115. Das dem Werkstück-Anlageelement 127 zugeordnete Ende des Steuerstößels 129 ist in einer axialen Ausnehmung 132 an Anlageelement-Halterung 128 verschieblich geführt. Ein Federelement in Form einer Spiralfeder 133 umgibt den Steuerstößel 129. Ein Ende der Spiralfeder 133 liegt an der Steuernocke 130 an, das andere Ende liegt an der Anlageelement-Halterung 128 an.

In Figur 10 sind die Verhältnisse gezeigt, wenn kein Blech 2 an dem Werkstückanschlag 73 anliegt. Der rechte Werkstücksensor 113 ist geschlossen, d. h. in der rechten Druckluftleitung 116 anliegende Druckluft kann nicht entweichen. Die Steuernocke 124 wird durch die Druckluft auf eine konusförmige Dichtungsfläche 135 an dem Schraubeinsatz 123 gepresst. Im rechten Druckluftkanal 116 kann sich folglich ein Staudruck aufbauen.

Der linke Werkstücksensor 114 ist dahingegen offen. Die im linken Druckluftkanal 116 anliegende Druckluft kann vorbei an der Steuernocke 130, dem Steuerstößel 129 usw. entweichen. Zu diesem Zweck kann die Steuernocke 129 z. B. einen kreisförmigen Querschnitt mit einem kleineren Druckmesser als der Innendurchmesser des Druckluftkanals 116 aufweisen. Alternativ kann die Steuernocke 130 auch einen solchen Querschnitt aufweisen, dass Längskanten der Steuernocke 130 an der Wandung des Druckluftkanals 116 zur Anlage kommen, die Druckluft aber über Schlüsselweiten an der Steuernocke 130 vorbei entweichen kann. Entsprechendes gilt im Übrigen für die Steuernocke 124 und den Steuerstößel 122 des rechten Werkstücksensors 113.

Gemäß Figur 10 kann sich im linken Druckluftkanal 116 folglich kein Staudruck aufbauen.

In Figur 11 sind die Verhältnisse dargestellt, wenn das Blech 2 an den Anschlagflächen 115 anliegt. Das Blech 2 drückt das Werkstück-Anlageelement 121 des rechten Werkstücksensors 113 mitsamt dem Steuerstößel 122 in Figur 11 nach oben. Dadurch wird die Steuernocke 124 auf eine konische Dichtungsfläche 136 gepresst, welche von der Wandung des rechten Druckluftkanals 116 gebildet ist. Der rechte Werkstücksensor 113 ist folglich wiederum geschlossen. Es kann sich dort kein Staudruck aufbauen.

Der linke Werkstücksensor 114 ist nun auch geschlossen, da dessen Steuernocke 130 über die Spiralfeder 133 auf eine konische Dichtungsfläche 137 an der Wandung des linken Druckluftkanals 116 gepresst wird. Auch im linken Druckluftkanal 116 kann sich folglich ein Staudruck aufbauen.

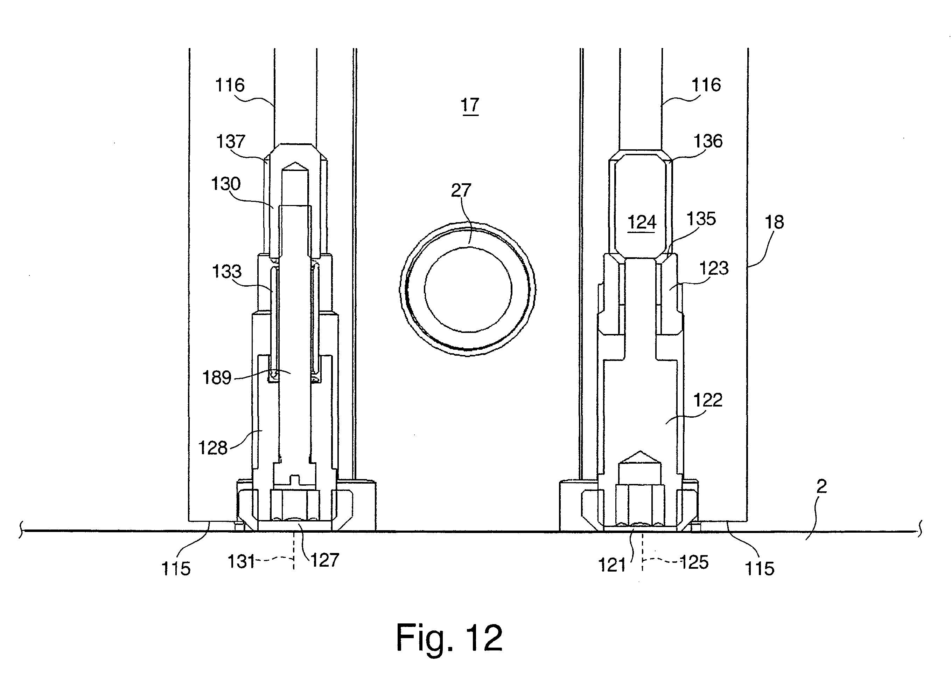

Gemäß Figur 12 ist der Rand des Blechs 2 mit einem geringfügigen Abstand, z. B. von 1 mm, von den vertikalen Anschlagflächen 115 des Werkstückanschlags 73 entfernt. Ein Anordnen des Blechrandes mit einem geringfügigen Abstand gegenüber den Anschlagsflächen 115 ist z. B. vorteilhaft, wenn während der Blechbearbeitung die Stelle, an welcher die Werkstück-Halteeinrichtung 8 das Blech 2 einspannt, entlang des Blechrandes verändert werden soll (Nachsetzen).

Bei einem solchen Nachsetzen wird das Blech 2 kurzseitig durch beispielsweise Nachsetzzylinder seitens der Werkzeugmaschine (nicht gezeigt) festgelegt und werden die geöffneten Werkstück-Halteeinrichtungen 8 mittels der Werkstück-Bewegungseinheit 5 entlang des Blechrandes umpositioniert. Um eventuelle Maßungenauigkeiten des Blechrandes auszugleichen, ist der Blechrand beim Umpositionieren sicherheitshalber etwas von den festen Anschlagflächen 115 beabstandet.

Im Falle des in Figur 12 dargestellten Zustandes liegt die Steuernocke 124 des rechten Werkstücksensors 113 weder an der wandungsseitigen

Dichtungsfläche 135 noch an der Dichtungsfläche 136 seitens des Schraubeinsatzes 123 an. Der rechte Werkstücksensor 113 ist folglich offen. Es kann sich dort ein Staudruck aufbauen.

Der linke Werkstücksensor 114 ist dahingegen geschlossen, weil die Steuernocke 130 des linken Werkstücksensors (noch) an der wandungsseitigen Dichtungsfläche 137 anliegt, obwohl die Anlageelement-Haterung 128 im Vergleich zu den in Figur 11 gezeigten Verhältnissen nach unten verschoben ist. Dies ergibt sich durch die zwischen der Anlageelement-Halterung 128 und der Steuernocke 130 angeordnete Spiralfeder 133, welche bei den in Figur 12 gezeigten Verhältnissen mit einer Federkraft gespannt ist, die größer ist als die Kraft, welche durch die Druckluft in der Druckluftleitung 116 auf die Steuernocke 130 wirkt.

Mittels der Messeinrichtungen 118 kann erfasst werden, ob in den Druckluftkanälen 116 ein Staudruck vorliegt oder nicht. Die Messeinrichtungen können folgende vier unterschiedliche Druckzustände melden:
- links: kein Staudruck, rechts: Staudruck (Figur 10),
- links: Staudruck, rechts: Staudruck (Figur 11),
- links: Staudruck, rechts: kein Staudruck (Figur 12) und
- links: kein Staudruck, rechts: kein Staudruck.

Aufgrund der ersten drei Zustände kann das Steuermodul 84 darauf zurückschließen, welchen der vorstehend beschriebenen drei Zustände ein Blech 2 gegenüber dem Werkstückanschlag 73 einnimmt.

Der vierte Druckzustand ermöglichte eine Überwachung der Funktionsstellung der Werkstück-Spannelemente 13, 17. Da die Druckluftkanäle 116 am Übergang zwischen dem Pratzenschnabel 18 und dem Gehäuse 28 offen sind, wenn die Werkstück-Spannelemente 13, 17 außerhalb der Funktionsstellung angeordnet sind, kann mittels der Staudruck-Erfassung überprüft werden, ob die Werkstück-Spannelemente 13, 17 ihre Funktionsstellung einnehmen. Wenn sich in beiden Druckluftkanälen 116 kein Staudruck aufbauen kann, sind die Werkstück-Spannelemente 13, 17 nicht in der Funktionsstellung angeordnet. Das Steuermodul 84 setzt gegebenenfalls eine Fehlermeldung ab.

Im Falle einer vereinfachten Bauart einer Werkstück-Halteeinrichtung kann auch nur ein Werkstücksensor einschließlich einer Messeinrichtung zur Staudruckabfrage vorgesehen sein, der derart ausgebildet sein kann, dass sich im zugeordneten Druckluftkanal ein Staudruck nur dann aufbauen kann, wenn das Blech 2 an den Anschlagflächen 115 anliegt und die Werkstück-Spannelemente 13, 17 ihre Funktionsstellung einnehmen. Insbesondere der Zustand gemäß Figur 12 wäre folglich nicht gesondert überwachbar.

Im Übrigen können auch andere Endstellungen der beweglichen Teile der Werkstück-Halteeinrichtung 8 mittels Staudruckabfragen überwacht werden. Außerdem können die Befestigungsstellen der Werkstück-Halteeinrichtung 8, welche Sollbruchstellen bei einer Kollision bilden können, pneumatisch überwacht werden.

Generell sind verschiedene Varianten von Werkstück-Halteeinrichtungen 8 denkbar, welche insbesondere mit oder ohne Rückziehantrieb 23 sowie mit oder ohne Höhenbeweglichkeit ausgebildet sein können.

## Patentansprüche

1. Werkstück-Halteeinrichtung zum Festlegen eines plattenartigen Werkstückes, insbesondere eines Blechs (2), an einer Werkstück-Bewegungseinheit (5) einer Werkzeugmaschine (1) mit zumindest zwei Werkstück-Spannelementen (13, 17) und einem Spannantrieb (31), mittels dessen die Werkstück-Spannelemente (13, 17) ausgehend von einer Ausgangsrelativposition aufeinander zu bewegbar sind, um ein zwischen den Werkstück-Spannelementen (13, 17) angeordnetes Werkstück einzuspannen, **dadurch gekennzeichnet, dass** Einstellmittel (51) mit einem Stellantrieb (52) vorgesehen sind, mittels dessen die Ausgangsrelativposition der Werkstück-Spannelemente (13, 17) einstellbar ist.

2. Werkstück-Halteeinrichtung nach Anspruch 1, **dadurch gekennzeichnet, dass** die Ausgangsrelativposition der Werkstück-Spannelemente (13, 17) mittels des Stellantriebs (52) derart einstellbar ist, dass die Werkstück-Spannelemente (13, 17) in der Ausgangsrelativposition an einem festzulegenden Werkstück mit einer Vorspannkraft anliegen.

3. Werkstück-Halteeinrichtung nach einem der vorhergehenden Ansprüche, **dadurch gekennzeichnet, dass** die Ausgangsrelativposition der Werkstück-Spannelemente (13, 17) mittels des Stellantriebs (52) ausgehend von einer maximalen Öffnungsstellung der Werkstück-Spannelemente (13, 17) einstellbar ist.

4. Werkstück-Hafteeinrichtung nach einem der vorhergehenden Ansprüche, **dadurch gekennzeichnet, dass** die Einstellmittel (51) zwischen dem Spannantrieb (31) und einem mittels des Spannantriebs (31) bewegbaren Werkstück-Spannelement (13) angeordnet sind.

5. Werkstück-Halteeinrichtung nach einem der vorhergehenden Ansprüche, **dadurch gekennzeichnet, dass** zumindest eines der Werkstück-Spannelemente (13) mittels des Spannantriebs (31) über eine schwenkbar gelagerte Umlenkeinrichtung (45) bewegbar ist.

6. Werkstück-Halteeinrichtung nach Anspruch 5, **dadurch gekennzeichnet, dass** die Einstellmittel (51) an der schwenkbar gelagerten Umlenkeinrichtung (45) vorgesehen sind.

7. Werkstück-Halteeinrichtung nach einem der Ansprüche 5 oder 6, **dadurch gekennzeichnet, dass** mittels des Stellantriebs (52) eine die Ausgangsrelativposition der Werkstück-Spannelemente (13, 17) bestimmende Ausgangsschwenkposition der schwenkbar gelagerten Umlenkeinrichtung (45) einstellbar ist.

8. Werkstück-Halteeinrichtung nach einem der vorhergehenden Ansprüche, **dadurch gekennzeichnet, dass** der Stellantrieb (52) eine verschiebbare Keilfläche (56) aufweist.

9. Werkstück-Halteeinrichtung nach einem der vorhergehenden Ansprüche, **dadurch gekennzeichnet, dass** ein Rückziehantrieb (23) vorgesehen ist, mittels dessen die Werkstück-Spannelemente (13, 17) relativ zu einem Gehäuse (28) der Werkstück-Halteeinrichtung (8) zwischen einer Funktionsstellung und einer Rückzugsstellung hin und her bewegbar sind.

10. Werkstück-Halteeinrichtung nach einem der vorhergehenden Ansprüche, **dadurch gekennzeichnet, dass** der Stellantrieb (52), der Spannantrieb (31) und/oder der Rückziehantrieb (23) als Kolbenzylinderantrieb, insbesondere als pneumatischer Kolbenzylinderantrieb, ausgebildet ist bzw. sind.

11. Werkstück-Halteeinrichtung nach Anspruch 8, **dadurch gekennzeichnet, dass** die Keilfläche (56) des Stellantriebs (52) an einem Kolben (53) eines den Stellantrieb (52) bildenden Kolbenzylinderantriebs vorgesehen ist.

12. Werkstück-Halteeinrichtung nach einem der vorhergehenden Ansprüche, **dadurch gekennzeichnet, dass** die Werkstück-Spannelemente (13, 17) an Spannelement-Halterungen vorgesehen sind, welche an einem Kolben (22) eines einen Rückziehantrieb (23) bildenden Kolbenzylinderantriebs befestigt sind.

13. Werkstück-Halteeinrichtung nach einem der vorhergehenden Ansprüche, **dadurch gekennzeichnet, dass** zumindest eines der Werkstück-Spannelemente (13) mittels des Spannantriebs (31) über einen Keilmechanismus bewegbar ist.

14. Werkstück-Halteeinrichtung nach einem der vorhergehenden Ansprüche, **dadurch gekennzeichnet, dass** zumindest ein Werkstück-Spannelement (13) relativ zu dem anderen Werkstück-Spannelement (17) schwenkbar gelagert ist.

15. Werkstück-Halteeinrichtung nach einem der vorhergehenden Ansprüche, **dadurch gekennzeichnet, dass** zumindest ein Werkstück-Spannelement (13) an einer Spannelement-Halterung vorgesehen ist, welche von einem durch den Spannantrieb (31) angetriebenen Druckelement (62) unter Ausbildung eines Reib- und/oder Formschlusses beaufschlagbar ist, der eine Bewegung der Werkstück-Spannelemente (13, 17) aus einer Funktionsstellung in Richtung einer Rückzugsstellung zumindest hemmt.

16. Werkstück-Halteeinrichtung nach einem der vorhergehenden Ansprüche, **dadurch gekennzeichnet, dass** zumindest ein Werkstück-Spannelement (17) an einer Spannelement-Halterung vorgesehen ist, welche aufgrund der durch den Spannantrieb (31) erzeugbaren Spannkraft entlang einer Beaufschlagungsachse (77) auf zumindest zwei, zueinander geneigte Flächenabschnitte (78) einer Führungsfläche (76) pressbar ist, an welcher die Spannelement-Halterung entlang einer Rückziehachse (26) zum Überführen in die Rückzugsstellung verschiebbar ist, wobei die Flächenabschnitte (78) senkrecht zur Beaufschlagungsachse (77) und senkrecht zur Rückziehachse (26) voneinander beabstandet sind.

17. Werkstück-Halteeinrichtung nach einem der vorhergehenden Ansprüche, **dadurch gekennzeichnet, dass** der Spannantrieb (31) eine Keilfläche (56) aufweist, die an einem Einstellbauteil vorgesehen ist, das von einem spannantriebseitigen Antriebselement (41) entlang einer Beaufschlagungsachse (80) auf zumindest zwei, zueinander geneigte Flächenabschnitte (81) einer Führungsfläche pressbar ist, an welcher das Einstellbauteil entlang einer Stellachse zur Änderung der Ausgangsrelativposition der Werkstück-Spannelemente (13, 17) verschiebbar ist, wobei die Flächenabschnitte (81) senkrecht zur Beaufschlagungsachse (80) und senkrecht zur Stellachse voneinander beabstandet sind.

18. Werkstück-Halteeinrichtung nach einem der vorhergehenden Ansprüche, **dadurch gekennzeichnet, dass** ein Arbeitsmediumsystem für den Stellantrieb (52) vorgesehen ist, welches eine Auslassöffnung (90) aufweist, die geschlossen ist, wenn die Werkstück-Spannelemente (13, 17) in einer Funktionsstellung angeordnet sind, und die offen ist, wenn die Werkstück-Spannelemente (13, 17) außerhalb der Funktionsstellung angeordnet sind.

19. Werkstück-Halteeinrichtung nach einem der vorhergehenden Ansprüche, **dadurch gekennzeichnet, dass** ein Arbeitsmediumsystem für den Rückziehantrieb (23) vorgesehen ist, welches eine Auslassöffnung (103) aufweist, die geschlossen ist, wenn der Stellantrieb (52) einen Zustand einnimmt, in welchem die Werkstück-Spannelemente (13, 17) maximal voneinander entfernt sind, und die offen ist, wenn der Stellantrieb (13, 17) einen anderen Zustand einnimmt.

20. Werkstück-Halteeinrichtung nach einem der vorhergehenden Ansprüche, **dadurch gekennzeichnet, dass** Steuermittel vorgesehen sind, mittels derer einem Arbeitszylinder (35) eines den Spannantrieb (31) bildenden Kolbenzylinderantriebs in Abhängigkeit des Arbeitsdrucks im Arbeitszylinder (54) eines den Stellantrieb (52) bildenden Kolbenzylinderantriebs ein Arbeitsmedium zuführbar ist.

21. Werkstück-Halteeinrichtung nach einem der vorhergehenden Ansprüche, **dadurch gekennzeichnet, dass** die Werkstück-Halteeinrichtung (8) einen Werkstückanschlag (73) aufweist, welcher mit zumindest einem Werkstücksensor (113, 114) versehen ist, der vorzugsweise als pneumatischer Werkstücksensor (113, 114) ausgebildet ist.

## Claims

1. Workpiece retention device for securing a plate-like workpiece, in particular a metal sheet (2), to a workpiece movement unit (5) of a machine tool (1) having at least two workpiece clamping elements (13, 17) and a clamping drive (31), by means of which the workpiece clamping elements (13, 17) can be moved towards each other from an initial relative position in order to clamp a workpiece which is arranged between the workpiece clamping elements (13, 17), **characterised in that** there are provided adjustment means (51) having an adjusting drive (52) by means of which the initial relative position of the workpiece clamping elements (13, 17) can be adjusted.

2. Workpiece retention device according to claim 1, **characterised in that** the initial relative position of the workpiece clamping elements (13, 17) can be adjusted by means of the adjusting drive (52) in such a manner that the workpiece clamping elements (13, 17) in the initial relative position are in abutment with a workpiece to be secured with a pretensioning force.

3. Workpiece retention device according to either of the preceding claims, **characterised in that** the initial relative position of the workpiece clamping elements (13, 17) can be adjusted by means of the adjusting drive (52) starting from a maximum opening position of the workpiece clamping elements (13, 17).

4. Workpiece retention device according to any one of the preceding claims, **characterised in that** the adjustment means (51) are arranged between the clamping drive (31) and a workpiece clamping element (13) which can be moved by means of the clamping drive (31).

5. Workpiece retention device according to any one of the preceding claims, **characterised in that** at least one of the workpiece clamping elements (13) can be moved by means of the clamping drive (31) via a pivotably supported redirection device (45).

6. Workpiece retention device according to claim 5, **characterised in that** the adjustment means (51) are provided on the pivotably supported redirection device (45).

7. Workpiece retention device according to either claim 5 or claim 6, **characterised in that** an initial pivot position of the pivotably supported redirection device (45), which initial pivot position determines the initial relative position of the workpiece clamping elements (13, 17), can be adjusted by means of the adjusting drive (52).

8. Workpiece retention device according to any one of the preceding claims, **characterised in that** the adjusting drive (52) has a displaceable wedge face (56).

9. Workpiece retention device according to any one of the preceding claims, **characterised in that** there is provided a retraction drive (23) by means of which the workpiece clamping elements (13, 17) can be moved back and forth relative to a housing (28) of the workpiece retention device (8) between an operating position and a retraction position.

10. Workpiece retention device according to any one of the preceding claims, **characterised in that** the adjusting drive (52), the clamping drive (31) and/or the retraction drive (23) is/are constructed as a piston cylinder drive, in particular as a pneumatic piston cylinder drive.

11. Workpiece retention device according to claim 8, **characterised in that** the wedge face (56) of the adjusting drive (52) is provided on a piston (53) of a piston cylinder drive which forms the adjusting drive (52).

12. Workpiece retention device according to any one of the preceding claims, **characterised in that** the workpiece clamping elements (13, 17) are provided on clamping element retention members, which are secured to a piston (22) of a piston cylinder drive which forms a retraction drive (23).

13. Workpiece retention device according to any one of the preceding claims, **characterised in that** at least one of the workpiece clamping elements (13) can be moved by means of the clamping drive (31) via a wedge mechanism.

14. Workpiece retention device according to any one of the preceding claims, **characterised in that** at least one workpiece clamping element (13) is supported so as to be pivotable with respect to the other workpiece clamping element (17).

15. Workpiece retention device according to any one of the preceding claims, **characterised in that** at least one workpiece clamping element (13) is provided on a clamping element retention member which can be acted on by a pressure element (62) which is driven by the clamping drive (31) so as to form a frictional and/or positive-locking engagement which at least inhibits a movement of the workpiece clamping elements (13, 17) from an operating position in the direction of a retraction position.

16. Workpiece retention device according to any one of the preceding claims, **characterised in that** at least one workpiece clamping element (17) is provided on a clamping element retention member which, owing to the clamping force which can be produced by the clamping drive (31), can be pressed along an actuation axis (77) on at least two mutually inclined surface portions (78) of a guiding face (76) on which the clamping element retention member can be displaced along a retraction axis (26) in order to move into the retraction position, the surface portions (78) being spaced apart from each other perpendicularly relative to the actuation axis (77) and perpendicularly relative to the retraction axis (26).

17. Workpiece retention device according to any one of the preceding claims, **characterised in that** the clamping drive (31) has a wedge face (56) which is provided on an adjustment component, which can be pressed by a clamping-drive-side drive element (41) along an actuation axis (80) onto at least two mutually inclined surface portions (81) of a guiding face on which the adjustment component can be displaced along a positioning axis in order to change the initial relative position of the workpiece clamping elements (13, 17), the surface portions (81) being spaced apart from each other perpendicularly relative to the actuation axis (80) and perpendicularly relative to the positioning axis.

18. Workpiece retention device according to any one of the preceding claims, **characterised in that** there is provided for the adjusting drive (52) an operating medium system which has an outlet opening (90) which is closed when the workpiece clamping elements (13, 17) are arranged in an operating position and which is open when the workpiece clamping elements (13, 17) are arranged outside the operating position.

19. Workpiece retention device according to any one of the preceding claims, **characterised in that** there is provided for the retraction drive (23) an operating medium system which has an outlet opening (103) which is closed when the actuation drive (52) assumes a state in which the workpiece clamping elements (13, 17) are spaced apart from each other to the maximum extent, and which is open when the actuation drive (13, 17) assumes another state.

20. Workpiece retention device according to any one of the preceding claims, **characterised in that** there are provided control means by way of which an operating medium can be supplied to an operating cylinder (35) of a piston cylinder drive which forms the clamping drive (31) in accordance with the operating pressure in the operating cylinder (54) of a piston cylinder drive which forms the adjusting drive (52).

21. Workpiece retention device according to any one of the preceding claims, **characterised in that** the workpiece retention device (8) has a workpiece stop (73) which is provided with at least one workpiece sensor (113, 114) which is preferably constructed as a pneumatic workpiece sensor (113, 114).

## Revendications

1. Dispositif de maintien de pièce pour fixer en position une pièce usinée du genre plaque, en particulier une tôle (2), à une unité de déplacement de pièce (5) d'une machine-outil (1), avec au moins deux éléments de serrage de pièce (13, 17) et avec un entraînement de serrage (31) au moyen duquel les éléments de serrage de pièce (13, 17) peuvent être déplacés l'un vers l'autre en partant d'une position relative initiale, afin de serrer une pièce disposée entre les éléments de serrage de pièce (13, 17), **caractérisé en ce qu'**il est prévu des moyens de réglage (51) pourvus d'un entraînement de réglage (52) au moyen duquel la position relative initiale des éléments de serrage de pièce (13, 17) peut être réglée.

2. Dispositif de maintien de pièce selon la revendication 1, **caractérisé en ce que** la position relative initiale des éléments de serrage de pièce (13, 17) peut être réglée au moyen de l'entraînement de réglage (52) de telle sorte que les éléments de serrage de pièce (13, 17), dans la position relative initiale, s'appliquent avec une force de précontrainte contre une pièce usinée à fixer en position.

3. Dispositif de maintien de pièce selon l'une des revendications précédentes, **caractérisé en ce que** la position relative initiale des éléments de serrage de pièce (13, 17) peut être réglée au moyen de l'entraînement de réglage (52) en partant d'une position d'ouverture maximale des éléments de serrage de pièce (13, 17).

4. Dispositif de maintien de pièce selon l'une des revendications précédentes, **caractérisé en ce que** les moyens de réglage (51) sont disposés entre l'entraînement de serrage (31) et un élément de serrage de pièce (13) pouvant être déplacé au moyen de l'entraînement de serrage (31).

5. Dispositif de maintien de pièce selon l'une des revendications précédentes, **caractérisé en ce qu'**au moins un (13) des éléments de serrage de pièce peut être déplacé au moyen de l'entraînement de serrage (31) par l'intermédiaire d'un dispositif de renvoi (45) monté pivotant.

6. Dispositif de maintien de pièce selon la revendication 5, **caractérisé en ce que** les moyens de réglage (51) sont prévus sur le dispositif de renvoi (45) monté pivotant.

7. Dispositif de maintien de pièce selon la revendication 5 ou 6, **caractérisé en ce qu'**au moyen de l'entraînement de réglage (52), on peut régler une position de pivotement initiale du dispositif de renvoi (45) monté pivotant qui détermine la position relative initiale des éléments de serrage de pièce (13, 17).

8. Dispositif de maintien de pièce selon l'une des revendications précédentes, **caractérisé en ce que** l'entraînement de réglage (52) présente une face biaise coulissante (56).

9. Dispositif de maintien de pièce selon l'une des revendications précédentes, **caractérisé en ce qu'**il est prévu un entraînement de rétraction (23) au moyen duquel les éléments de serrage de pièce (13, 17) peuvent être déplacés en va-et-vient entre une position de fonctionnement et une position rétractée par rapport à un boîtier (28) du dispositif de maintien de pièce (8).

10. Dispositif de maintien de pièce selon l'une des revendications précédentes, **caractérisé en ce que** l'entraînement de réglage (52), l'entraînement de serrage (31) et/ou l'entraînement de rétraction (23) est ou sont réalisés sous forme d'entraînement à piston-cylindre, en particulier sous forme d'entraînement à piston-cylindre pneumatique.

11. Dispositif de maintien de pièce selon la revendication 8, **caractérisé en ce que** la face biaise (56) de l'entraînement de réglage (52) est prévue sur un piston (53) d'un entraînement à piston-cylindre formant l'entraînement de réglage (52).

12. Dispositif de maintien de pièce selon l'une des revendications précédentes, **caractérisé en ce que** les éléments de serrage de pièce (13, 17) sont prévus sur des supports d'élément de serrage qui sont fixés sur un piston (22) d'un entraînement à piston-cylindre formant un entraînement de rétraction (23).

13. Dispositif de maintien de pièce selon l'une des revendications précédentes, **caractérisé en ce qu'**au moins un (13) des éléments de serrage de pièce peut être déplacé au moyen de l'entraînement de serrage (31) par l'intermédiaire d'un mécanisme à faces biaises.

14. Dispositif de maintien de pièce selon l'une des revendications précédentes, **caractérisé en ce qu'**au moins un (13) des éléments de serrage de pièce est monté pivotant par rapport à l'autre élément de serrage de pièce (17).

15. Dispositif de maintien de pièce selon l'une des revendications précédentes, **caractérisé en ce qu'**au moins un (13) des éléments de serrage de pièce est prévu sur un support d'élément de serrage qui peut être sollicité par un élément de pression (62), entraîné par l'entraînement de serrage (31), en formant un engagement par friction et/ou par complémentarité de forme qui au moins enraye un déplacement des éléments de serrage de pièce (13, 17) depuis une position de fonctionnement en direction d'une position rétractée.

16. Dispositif de maintien de pièce selon l'une des revendications précédentes, **caractérisé en ce qu'**au moins un élément de serrage de pièce (17) est prévu sur un support d'élément de serrage qui, en vertu de la force de serrage pouvant être produite par l'entraînement de serrage (31), peut être pressé le long d'un axe de sollicitation (77) sur au moins deux parties de surface (78) inclinées l'une par rapport à l'autre d'une surface de guidage (76) à laquelle le support d'élément de serrage peut coulisser le long d'un axe de rétraction (26) pour le transfert dans la position rétractée, sachant que les parties de surface (78) sont mutuellement distantes perpendiculairement à l'axe de sollicitation (77) et perpendiculairement à l'axe de rétraction (26).

17. Dispositif de maintien de pièce selon l'une des revendications précédentes, **caractérisé en ce que** l'entraînement de serrage (31) présente une face biaise (56) qui est prévue sur un composant de réglage qui peut être pressé, par un élément d'entraînement (41) de l'entraînement de serrage, le long d'un axe de sollicitation (80) sur au moins deux parties de surface (81) inclinées l'une par rapport à l'autre d'une surface de guidage à laquelle le composant de réglage peut coulisser le long d'un axe de réglage afin de modifier la position relative initiale des éléments de serrage de pièce (13, 17), sachant que les parties de surface (81) sont mutuellement distantes perpendiculairement à l'axe de sollicitation (80) et perpendiculairement à l'axe de réglage.

18. Dispositif de maintien de pièce selon l'une des revendications précédentes, **caractérisé en ce qu'**il est prévu un système de fluide de travail pour l'entraînement de réglage (52), système qui présente une ouverture de sortie (90) qui est fermée lorsque les éléments de serrage de pièce (13, 17) sont disposés dans une position de fonctionnement, et qui est ouverte lorsque les éléments de serrage de pièce (13, 17) sont disposés en dehors de la position de fonctionnement.

19. Dispositif de maintien de pièce selon l'une des revendications précédentes, **caractérisé en ce qu'**il est prévu un système de fluide de travail pour l'entraînement de rétraction (23), système qui présente une ouverture de sortie (103) qui est fermée lorsque l'entraînement de réglage (52) prend un état dans lequel les éléments de serrage de pièce (13, 17) sont éloignés à une distance maximale l'un de l'autre, et qui est ouverte lorsque l'entraînement de réglage (52) prend un autre état.

20. Dispositif de maintien de pièce selon l'une des revendications précédentes, **caractérisé en ce qu'**il est prévu des moyens de commande au moyen desquels un fluide de travail peut être apporté au cylindre de travail (35) d'un entraînement à piston-cylindre formant l'entraînement de serrage (31) en fonction de la pression de travail dans le cylindre de travail (54) d'un entraînement à piston-cylindre formant l'entraînement de réglage (52).

21. Dispositif de maintien de pièce selon l'une des revendications précédentes, **caractérisé en ce que** le dispositif de maintien de pièce (8) présente une butée de pièce (73) qui est pourvue d'au moins un capteur de pièce (113, 114) qui est de préférence réalisé sous forme de capteur de pièce pneumatique (113, 114).
